# EUROPÄISCHE PATENTSCHRIFT

(11) **EP 2 140 117 B1**
(45) Veröffentlichungstag und Bekanntmachung des Hinweises auf die Patenterteilung: **23.05.2012**
(21) Anmeldenummer: 06818884.6
(22) Anmeldetag: 28.11.2006
(51) Int. Cl.: F01N 3/20, B01D 53/90

(54) **VERFAHREN UND VORRICHTUNG ZUM DOSIEREN EINES REDUKTIONSMITTELS IN EIN ABGASSYSTEM EINER BRENNKRAFTMASCHINE**
PROCESS AND DEVICE FOR DOSING A REDUCING AGENT IN AN EXHAUST SYSTEM OF AN INTERNAL COMBUSTION ENGINE
PROCÉDÉ ET DISPOSITIF POUR DOSER UN AGENT DE RÉDUCTION DANS UN SYSTÈME D'ÉCHAPPEMENT D'UN MOTEUR À COMBUSTION INTERNE

(30) Priorität: 03.05.2006 DE 102006020439
(43) Veröffentlichungstag der Anmeldung: 06.01.2010
(73) Patentinhaber: Robert Bosch GmbH, 70442 Stuttgart (DE)
(72) Erfinder: KASSEL, Armin, 58119 Hagen (DE); LÜCKING, Christof, 58300 Wetter (DE); NOACK, Frank, 58675 Hemer (DE)
(86) Internationale Anmeldenummer: PCT/EP2006/011409
(87) Internationale Veröffentlichungsnummer: WO 2007/124779

(56) Entgegenhaltungen:
- DE-A1- 10 332 114
- DE-A1-102004 050 022
- US-A1- 2002 001 554

## Beschreibung

Die Erfindung betrifft ein Verfahren zum Dosieren eines flüssigen Reduktionsmittels in ein Abgassystem einer Brennkraftmaschine sowie eine hierfür geeignete Vorrichtung mit den Merkmalen des Oberbegriffs des Anspruchs 7.

Aus der DE 10 2004 050 022 A1 ist eine Vorrichtung zum Dosieren eines flüssigen Reduktionsmittels in ein Abgassystem einer Brennkraftmaschine bekannt, welche ein Dosierventil in Form eines Ventilelements und einer Düse zur Abgabe eines Reduktionsmittels in das Abgassystem umfasst. Die Vorrichtung beinhaltet ferner eine Dosierpumpe, die über eine Vorlaufleitung mit dem Dosierventil verbunden ist und die zur Durchführung von rasch aufeinander folgenden, zeitlich voneinander abgesetzten Einzelfördervorgängen für das Reduktionsmittel ausgelegt ist. Das Dosierventil ist über eine Rücklaufleitung mit einem Behälter verbunden. Vom Dosierventil aus ist das Reduktionsmittel wahlweise in zeitlich voneinander abgesetzten Einzeldosiervorgängen dem Abgassystem zuführbar oder in zeitlich voneinander abgesetzten Einzelrückführvorgängen dem Behälter zuführbar. In der Rücklaufleitung ist eine Steuerventilanordnung in Form eines Schaltventils angeordnet, das zur Durchführung eines Einzeldosiervorgangs eine Dosierstellung einnimmt, in der die Rücklaufleitung abgesperrt ist. Aus der DE 103 32 114 A1 ist eine Vorrichtung zum Dosieren eines flüssigen Reduktionsmittels in ein Abgassystem einer Brennkraftmaschine bekannt, bei welcher das Reduktionsmittel über ein Dosierventil in das Abgassystem abgegeben wird. Das Dosierventil weist einen beweglichen Kolben auf, der durch den Druck des Reduktionsmittels von seinem Sitz abgehoben wird und dadurch eine Ventilöffnung freigibt, so dass das Reduktionsmittel ins Abgas abgegeben werden kann. In einer Ausführungsform weist das Dosierventil einen Zulauf und einen Rücklauf auf und das Reduktionsmittel wird laufend durch das Dosierventil gefördert. Im Falle einer Abgabe von Reduktionsmittel ins Abgas vermindert sich die durch den Rücklauf zu einem Behälter für das Reduktionsmittel geförderte Reduktionsmittelmenge entsprechend. Dimensionierungen einer in der Zulaufleitung bzw. in der Rücklaufleitung angeordneten Drossel, eines in der Rücklaufleitung angeordneten Durchflusssteuerventils, sowie der von einer Förderpumpe erzeugte Druck des Reduktionsmittels und die Öffnungscharakteristik des Dosierventils beeinflussen die ins Abgassystem abgegebene Reduktionsmittelmenge und machen das System relativ kompliziert.

Aufgabe der Erfindung ist es, ein Verfahren und eine Vorrichtung anzugeben, welche auf einfache Weise eine betriebssichere Dosierung von flüssigem Reduktionsmittel erlauben und bei denen Fehlfunktionen weitgehend ausgeschlossen sind.

Diese Aufgabe wird durch ein Verfahren mit den Merkmalen des Anspruchs 1 sowie durch eine Vorrichtung mit den Merkmalen des Anspruchs 7 gelöst.

In dem erfindungsgemäßen Verfahren nimmt die Steuerventilanordnung zur Durchführung eines Einzelrücklaufvorgangs eine Rücklaufstellung ein, in der Reduktionsmittel unter Überwindung eines Gegendrucks durch die Rücklaufleitung in den Behälter strömen kann. Das in den Einzelrücklaufvorgängen durch das Dosierventil geförderte Reduktionsmittel ermöglicht eine zusätzliche Kühlung des Dosierventils. Einzeldosiervorgänge und Einzelrücklaufvorgänge erfolgen vorzugsweise mit einer vorgebbaren Frequenz von mehreren Hertz. Durch die jeweilige Stellung der Steuerventilanordnung in der Rücklaufleitung wird bestimmt, ob ein Einzelfördervorgang der Dosierpumpe als Einzeldosiervorgang oder als Einzelrücklaufvorgang ausgebildet ist. Der Gegendruck während eines Einzelrücklaufvorgangs wird bevorzugt derart eingestellt, dass auch bei erhitztem Reduktionsmittel eine Dampfblasenbildung durch Sieden des Reduktionsmittels insbesondere in der Rücklaufleitung verhindert wird. Damit ist auch unter ungünstigen thermischen Bedingungen eine zuverlässige Kühlung des Dosierventils ermöglicht.

In Ausgestaltung des Verfahrens wird beim Betrieb der Dosierpumpe im Dosierventil dauerhaft ein Überdruck zumindest für das zum Dosierventil geförderte Reduktionsmittel aufrechterhalten. Da der Überdruck von der Dosierpumpe erzeugt wird, ist somit auch in einer Zuleitung von der Dosierpumpe zum Dosierventil beim normalen Betrieb ständig ein Überdruck für das Reduktionsmittel vorhanden. Dabei wird der Überdruck durch eine entsprechende Ausbildung des Dosierventils und der Steuerventilanordnung vorzugsweise derart eingestellt, dass auch bei erhitztem Reduktionsmittel eine Dampfblasenbildung durch Sieden des Reduktionsmittels zumindest im Zulauf bis zum Dosierventil verhindert wird. Bei einem bevorzugten Druck von etwa 10 bar kann ein Sieden bzw. eine Dampfblasenbildung bis etwa 180 °C zuverlässig verhindert werden. Damit ist auch unter ungünstigen thermischen Bedingungen eine zuverlässige und genaue Dosierung ermöglicht.

In weiterer Ausgestaltung des Verfahrens wechseln Einzeldosiervorgänge und Einzelrücklaufvorgänge in vorgebbarer Reihenfolge ab. Von der Dosierpumpe wird das Reduktionsmittel in zeitlich voneinander abgesetzten Einzelfördervorgängen zu dem Dosierventil gefördert und von dort aus wahlweise entweder in Einzeldosiervorgängen in das Abgassystem abgegeben oder in Einzelrücklaufvorgängen durch das Dosierventil hindurch und zu dem Behälter für das Reduktionsmittel geleitet. Bei entsprechender Auslegung der Dosierpumpe, vorzugsweise als Kolbenpumpe oder als Membranpumpe, sind die von einer solchen Pumpe in Einzelfördervorgängen geförderten Einzelfördermengen durch die Dimensionierung der Dosierpumpe festgelegt. Durch eine Festlegung einer Anzahl von Einzeldosiervorgängen lässt sich eine hohe Dosiergenauigkeit erreichen. Insbesondere kann bei einer konstanten Frequenz von Einzelfördervorgängen (Pumpfrequenz) der Dosierpumpe ein breiter Durchsatzbereich für zu dosierendes Reduktionsmittel abgedeckt werden. Es ist vorgesehen, dass ein Solldurchsatz von in das Abgassystem abzugebendem Reduktionsmittel vorgegeben wird und eine Reihenfolge von Einzeldosiervorgängen und Einzelrücklaufvorgängen derart berechnet und durchgeführt wird, dass der Solldurchsatz zumindest annähernd erreicht wird. Der Solldurchsatz orientiert sich hierbei vorzugsweise an einem Reduktionsmittelbedarf zur Erzielung einer angestrebten Wirkung einer Abgasreinigungskomponente, wie beispielsweise einer Stickoxidverminderungsrate. Bei einem höheren angeforderten Reduktionsmittel-Solldurchsatz wird das Verhältnis von Einzeldosiervorgängen zu Einzelrücklaufvorgängen gegenüber einem geringeren Reduktionsmittel-Solldurchsatz erhöht. Dabei kann in vorteilhafter Weise die Pumpfrequenz der Dosierpumpe konstant bleiben. Bei höherem Reduktionsmitteldurchsatz zu Dosierzwecken ist eine Kühlung des Dosierventils durch den erhöhten Durchsatz von ins Abgas abgegebenem Reduktionsmitteldurchsatz gewährleistet, während bei einem diesbezüglich geringeren Reduktionsmitteldurchsatz eine erhöhte Anzahl von Einzelrücklaufvorgängen für eine ausreichende Kühlung des Dosierventils sorgt.

In weiterer Ausgestaltung des Verfahrens wird bei der Einstellung der Reihenfolge von Einzeldosiervorgängen und Einzelrücklaufvorgängen zur Erreichung eines Solldurchsatzes eine Differenzmenge eines im direkten Anschluss an einen Einzelrücklaufvorgang erfolgenden ersten Einzeldosiervorgangs gegenüber anderen, direkt aufeinanderfolgenden Einzeldosiervorgängen berücksichtigt. Dadurch können durch mechanische Elastizitäten im vom Reduktionsmittel durchströmten System verursachte Abweichungen bei einer Umstellung von Einzelrücklaufvorgang auf Einzeldosiervorgang ausgeglichen werden. Auf diese Weise wird eine besonders hohe Dosiergenauigkeit erreicht. Bei der Differenzmenge kann es sich je nach Systemkonfiguration um eine Mindermenge oder eine Überschussmenge handeln.

In weiterer Ausgestaltung des Verfahrens wird das in einem Einzelrücklaufvorgang durch das Dosierventil geleitete Reduktionsmittel bis nahe an dessen abgasseitige Spitze geführt. Auf diese Weise ist eine besonders wirksame Kühlung des Dosierventils, insbesondere bis zu dessen von heißem Abgas anströmbarer austrittsseitigen Spitze ermöglicht. Dadurch kann die thermische Belastung des Dosierventils bis zu dessen Spitze hin klein gehalten werden.

In weiterer Ausgestaltung des Verfahrens nimmt bei einem Stillsetzen der Dosierpumpe die Steuerventilanordnung eine Entlastungsstellung ein, in der die Rücklaufleitung druckentlastet ist. Auf diese Weise ist eine Volumenänderung des Reduktionsmittels nach Stillsetzung der Dosierpumpe ermöglicht, ohne dass dies zu nennenswerten Spannungen in der Struktur führt. Insbesondere ist die Gefahr von Beschädigungen an Rücklaufleitung, Vorlaufleitung und/oder Dosierventil infolge eines Einfrierens oder einer Wärmedehnung von Reduktionsmittel verringert.

In weiterer Ausgestaltung des Verfahrens nimmt die Steuerventilanordnung vor einer Inbetriebnahme der Dosierpumpe eine Entlastungsstellung ein, in der die Rücklaufleitung druckentlastet ist. Während eines Stillstands kann insbesondere bei geschlossenem Dosierventil und geschlossenem Steuerventil ein Überdruck oder ein Unterdruck in der Rücklaufleitung und im Leitungssystem infolge äußerer Einflüsse entstehen, beispielsweise infolge von Temperaturänderungen. Durch eine Druckentlastung der Rücklaufleitung und des Leitungssystems vor Inbetriebnahme werden übermäßige Druckspitzen bei der Inbetriebnahme zumindest weitgehend vermieden. Darüber hinaus ist es bei dieser Ausgestaltungsform möglich, vor einer Inbetriebnahme eventuell vorhandene Luft aus dem Leitungssystem zu entfernen und somit die Leitungen zu entlüften.

Die erfindungsgemäße Vorrichtung zum Dosieren eines flüssigen Reduktionsmittels in ein Abgassystem einer Brennkraftmaschine umfasst ein Dosierventil zur Abgabe des Reduktionsmittels in das Abgassystem, eine Dosierpumpe zur Förderung von Reduktionsmittel zum Dosierventil über eine die Dosierpumpe mit dem Dosierventil verbindende Vorlaufleitung, wobei die Dosierpumpe zur Durchführung von rasch aufeinander folgenden, zeitlich voneinander abgesetzten Einzelfördervorgängen für das Reduktionsmittel ausgelegt ist, eine vom Dosierventil zu einem Behälter für das Reduktionsmittel geführte Rücklaufleitung und eine in der Rücklaufleitung angeordnete Steuerventilanordnung, welche derart angesteuert werden kann, dass eine in einem Einzelfördervorgang von der Dosierpumpe zum Dosierventil geförderte Einzelfördermenge wenigstens annähernd vollständig wahlweise in einem Einzeldosiervorgang vom Dosierventil in das Abgassystem abgegeben oder in einem Einzelrücklaufvorgang durch das Dosierventil hindurch und über die Rücklaufleitung zum Behälter für das Reduktionsmittel zurück geleitet werden kann, und ist dadurch gekennzeichnet, dass die Steuerventilanordnung in einer Rücklaufstellung einen ersten Strömungsweg in die Rücklaufleitung schaltet, der bei einem vorgegebenen Rücklaufdruck des Reduktionsmittels eingangsseitig der Steuerventilanordnung freigegeben wird. Der erste Strömungsweg kann dabei in Form eines Strömungskanals oder mehrerer Strömungskanäle durch die Steuerventilanordnung ausgestaltet sein. Bei einem Betrieb der Steuerventilanordnung in Rücklaufstellung steht bis zu der Steuerventilanordnung ein erhöhter Reduktionsmitteldruck im Leitungssystem an, welcher vorzugsweise derart eingestellt ist, dass der Siededruck des Reduktionsmittels überschritten ist. Dadurch ist eine störende Dampfblasenbildung im Leitungssystem zumindest bis zur Steuerventilanordnung verhindert. Die Rücklaufleitung erlaubt ein Durchströmen des Dosierventils mit Reduktionsmittel auch dann, wenn keine Reduktionsmittelabgabe ins Abgas erfolgt. Auf diese Weise ist eine verbesserte Kühlung des Dosierventils ermöglicht. Die Ansteuerung der Steuerventilanordnung ist maßgebend für die ins Abgas abgegebene Reduktionsmittelmenge. Bevorzugt ist die Steuerventilanordnung entfernt vom Abgassystem angeordnet, wodurch sich thermische Belastungen vermeiden lassen und eine besonders hohe Dosiergenauigkeit und Zuverlässigkeit ermöglicht ist.

In Ausgestaltung der Erfindung gibt das Dosierventil bei einem vorgegebenen, eingangsseitig des Dosierventils anstehenden Dosierdruck des Reduktionsmittels eine Ventilöffnung frei, so dass Reduktionsmittel ins Abgassystem abgegeben werden kann. Das Dosierventil ist vorzugsweise als Ventil mit einem federbelasteten Ventilelement ausgeführt, welches bei dem von der entsprechenden Federkonstante vorbestimmten, von der Dosierpumpe erzeugten Dosierdruck selbsttätig öffnet und ein Abspritzen des Reduktionsmittels ins Abgas ermöglicht. Mit dieser Ausführungsform kann auf eine elektrische Hilfsenergieversorgung zur Betätigung des Dosierventils verzichtet werden, wodurch die Vorrichtung bei einfachem Aufbau besonders robust und zuverlässig ausgeführt werden kann.

In weiterer Ausgestaltung der Erfindung sind das Dosierventil und die Steuerventilanordnung so aufeinander abgestimmt ausgebildet, dass der Dosierdruck größer als der Rücklaufdruck ist. Dies ermöglicht eine besonders zuverlässige druckgesteuerte Zuordnung eines jeweiligen von der Dosierpumpe vorgenommenen Einzelfördervorgangs zu einem Einzeldosiervorgang oder Einzelrücklaufvorgang.

In weiterer Ausgestaltung der Erfindung sperrt die in der Rücklaufleitung angeordnete Steuerventilanordnung in einer Dosierstellung die Rücklaufleitung so ab, dass ein Durchströmen der Rücklaufleitung vom Dosierventil zum Behälter verhindert ist. Dies ermöglicht einen sicheren Druckaufbau im Dosierventil. Außerdem ist auf diese Weise sichergestellt, dass eine zur Abgabe ins Abgas vorgesehene Einzelfördermenge des Reduktionsmittels auch tatsächlich quantitativ ins Abgas gelangt. Dadurch wird eine besonders hohe Dosiergenauigkeit erreicht.

In weiterer Ausgestaltung der Erfindung gibt die Steuerventilanordnung in einer Entlastungsstellung insbesondere nach einer Stillsetzung der Dosierpumpe die Rücklaufleitung so frei, dass die Rücklaufleitung druckentlastet ist. Auf diese Weise ist die Gefahr einer Beschädigung an Rücklaufleitung, Vorlaufleitung und/oder Dosierventil infolge einer Druckänderung des Reduktionsmittels nach einer Stillsetzung der Dosierpumpe verringert. Eine solche Druckänderung kann beispielsweise bei einem Einfrieren oder durch Wärmeausdehnung des Reduktionsmittels auftreten.

In weiterer Ausgestaltung der Erfindung ist in der Entlastungsstellung der Steuerventilanordnung die Rücklaufleitung zumindest annähernd vollständig geöffnet. Somit ist dem Reduktionsmittel in der Steuerventilanordnung allenfalls ein geringer Widerstand entgegengesetzt, so dass die Gefahr von Beschädigungen an der Vorrichtung nach einer Stillsetzung der Dosierpumpe weiter verringert ist.

In weiterer Ausgestaltung der Erfindung umfasst die Steuerventilanordnung ein in der Rückführleitung angeordnetes Proportionalventil, bei dem eine Schließkraft einstellbar ist. Dadurch ist es möglich, die Schließkraft an einen Betriebszustand der Vorrichtung anzupassen. Insbesondere kann die Schließkraft auch so eingestellt werden, dass das Proportionalventil die Rücklaufleitung öffnet, wenn der Druck des Reduktionsmittels in der Rücklaufleitung einen Schwellenwert überschreitet, und versperrt, wenn der Druck in der Rücklaufleitung den Schwellenwert unterschreitet. Über eine geeignete Ansteuerung des Proportionalventils ist die Schließkraft und damit der Schwellenwert für das Öffnen des Proportionalventils einstellbar.

In weiterer Ausgestaltung der Erfindung ist in der Rücklaufstellung der Steuerventilanordnung die Schließkraft des Proportionalventils derart eingestellt, dass das Proportionalventil öffnet, wenn ein Druck des Reduktionsmittels anliegt, der den vorgegebenen Rücklaufdruck übersteigt. Der Rücklaufdruck ist vorzugsweise derart gewählt, dass der Druck des Reduktionsmittels im Leitungssystem den Siededruck überschreitet.

In weiterer Ausgestaltung der Erfindung umfasst das Proportionalventil einen beweglich gelagerten Schließkörper, einen Ventilsitz und eine ansteuerbare Kraft- oder Momentenerzeugungseinheit, wobei der Schließkörper in einer Arbeitsstellung mit dem Ventilsitz in Kontakt steht und wobei über die Kraft- oder Momentenerzeugungseinheit eine Schließkraft oder ein Schließmoment auf den Schließkörper ausgeübt werden kann. Die Schließkraft lässt sich insbesondere auch an die Druckverhältnisse in dem Leitungssystem anpassen. Bei entsprechender Ansteuerung der Kraft- oder Momentenerzeugungseinheit lässt sich in Abhängigkeit von einem Betriebszustand eine Sperrung der Rücklaufleitung, ein Leckstrom durch die Steuerventilanordnung und damit ein geringer Massenstrom durch die Rücklaufleitung oder eine Öffnung der Rücklaufleitung erzielen. Diese Ausgestaltungsform ermöglicht es ferner, durch Änderung der Schließkraft oder des Schließmoments einen Massenstrom durch die Steuerventilanordnung bei geringen Schaltzeiten zu verändern.

In weiterer Ausgestaltung der Erfindung ist der Schließkörper als Drehkolben ausgeführt und drehbar in einem Gehäuse der Steuerventilanordnung gelagert. In einer Schließstellung steht der Drehkolben in Kontakt mit dem Ventilsitz und ermöglicht eine Sperrung der Rücklaufleitung. Bevorzugt ist der Drehkolben in einer Offenstellung derart angeordnet, dass das Reduktionsmittel möglichst ungehindert die Steuerventilanordnung durchströmen kann. Ein Drehkolben zeichnet sich durch geringe Trägheitsmomente aus, so dass ein Umschalten zwischen der Offenstellung und der Schließstellung bei geringem Momentenaufwand ermöglicht ist.

In weiterer Ausgestaltung der Erfindung umfasst eine Momentenerzeugungseinheit eine elektrische Spule, über die sich in stromdurchflossenem Zustand ein Drehmoment auf einen Eisenkern in einer mit dem Drehkolben verbundenen Achse ausüben lässt. Eine solche Ausgestaltung ermöglicht eine besonders genaue Einstellung eines Moments.

In weiterer Ausgestaltung der Erfindung ist das Gehäuse der Steuerventilanordnung als Kunststoffteil ausgeführt und die Spule ist als umspritzte Spule in dem Gehäuse angeordnet. In wiederum einer weiteren Ausgestaltung der Erfindung ist auch die Achse des Drehkolbens als Kunststoffteil ausgeführt und der Eisenkern ist als umspritzter Eisenkern in der Achse angeordnet. Diese Ausführungsformen zeichnen sich durch eine einfache und preisgünstige Herstellbarkeit aus.

In weiterer Ausgestaltung der Erfindung ist der Schließkörper als Kolben ausgeführt und translatorisch beweglich in einem Gehäuse der Steuerventilanordnung gelagert. Dadurch ist eine alternative Ausgestaltungsform gegeben, mit der ein Massenstrom des Reduktionsmittels durch die Steuerventilanordnung bei geringen Schaltzeiten einstellbar ist.

In weiterer Ausgestaltung der Erfindung umfasst eine Krafterzeugungseinheit einen elektrischen Magnet, über den sich in stromdurchflossenem Zustand eine Kraft auf den Kolben ausüben lässt. Dadurch ist es möglich, eine Schließkraft bei geringen Schaltzeiten zu erzeugen beziehungsweise einzustellen.

In weiterer Ausgestaltung der Erfindung sind durch den Kolben eine erste Gehäusekammer und eine zweite Gehäusekammer voneinander getrennt, und in dem Kolben ist eine Öffnung angeordnet, über die Reduktionsmittel von einer Gehäusekammer in die andere Gehäusekammer transferierbar ist. Auf diese Weise ist das Reduktionsmittel bei geöffnetem Kolben durch das Gehäuse führbar, wobei das Gehäuse selbst den ersten Strömungsweg bildet. Bei geöffnetem Kolben ist das Reduktionsmittel der ersten Gehäusekammer zuführbar. Von dort ist es über die Öffnung in dem Kolben in die zweite Gehäusekammer transferierbar, an die sich die Rücklaufleitung anschließt, über die das Reduktionsmittel nachfolgend zum Behälter transportierbar ist. Die Öffnung ist bevorzugt derart ausgestaltet, dass eine Strömung des Reduktionsmittels durch die Öffnung gedrosselt ist. Dadurch ist es möglich, einen Überdruck auf der stromaufwärts gelegenen Seite aufrechtzuerhalten. Diese Ausgestaltungsform zeichnet sich ferner durch einen geringen Bauraumbedarf aus.

In weiterer Ausgestaltung der Erfindung ist der Kolben über ein Federelement mit dem Gehäuse verbunden. Durch das Federelement ist gewährleistet, dass der Kolben bei ausgeschaltetem Magneten in einer Sollposition gehalten ist. Vorzugsweise ist der Kolben in der Sollposition derart angeordnet, dass ein durchströmbarer Spalt zwischen Kolben und Ventilsitz gebildet ist, so dass ein Leckstrom durch das Gehäuse fließen kann. Die Ventilanordnung kann somit auf einfache Weise durch Ausschalten des Magneten in die Rücklaufstellung versetzt werden. Das Federelement ist bevorzugt als Zug-Druck-Federelement ausgestaltet.

In weiterer Ausgestaltung der Erfindung ist ein den ersten Strömungsweg umgehender zweiter Strömungsweg für die Rücklaufleitung vorgesehen, wobei nach einer Stillsetzung der Dosierpumpe die Steuerventilanordnung in Entlastungsstellung zumindest den zweiten Strömungsweg öffnet. Auf diese Weise ist eine weitere Möglichkeit gegeben, das gesamte System in der Entlastungsstellung von Druck zu entlasten.

In weiterer Ausgestaltung der Erfindung verlaufen die Vorlaufleitung und die Rücklaufleitung zumindest abschnittsweise, insbesondere im Bereich des Dosierventils koaxial. Vorzugsweise weist die Vorlaufleitung zumindest im Bereich des Dosierventils einen Abschnitt auf, in welchem sie von der Rücklaufleitung ringförmig umschlossen ist. Die umgekehrte Anordnung ist ebenfalls vorteilhaft. In beiden Fällen ist eine besonders effektive Kühlung des ins Abgas abzugebenden Reduktionsmittels durch rücklaufendes Reduktionsmittel ermöglicht. Ein unerwünschtes Ansteigen der Temperatur des eingangsseitig des Dosierventils anstehenden Reduktionsmittels kann dadurch auch bei kleinen Dosierraten vermieden werden.

In weiterer Ausgestaltung der Erfindung ist der Bereich, in welchem die Vorlaufleitung und die Rücklaufleitung koaxial verlaufen, wenigstens teilweise innerhalb einer Abgasleitung des Abgassystems angeordnet. Mit dieser Ausführungsform kann eine Überhitzung von dem Abgas ausgesetzten Teilen des Dosierventils vermieden werden.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: ein schematisches Blockbild einer Brennkraftmaschine, der ein Abgassystem und ein Dosiersystem für ein Reduktionsmittel zugeordnet sind,
- Fig. 2: eine schematische Darstellung einer bevorzugten Ausführungsform eines Dosierventils zur Abgabe des Reduktionsmittels ins Abgas,
- Fig. 3a bis 3c: schematische Darstellungen einer vorteilhaften ersten Ausführungsform einer Steuerventilanordnung in unterschiedlichen Stellungen mit unterschiedlichen Funktionen,
- Fig. 4: eine schematische Darstellung einer vorteilhaften zweiten Ausführungsform einer Steuerventilanordnung,
- Fig. 5a bis 5c: schematische Darstellungen einer vorteilhaften dritten Ausführungsform einer Steuerventilanordnung,
- Fig. 6a bis 6c: schematische Darstellungen einer vorteilhaften vierten Ausführungsform einer Steuerventilanordnung,
- Fig. 7a bis 7d: schematisch dargestellte zeitliche Folgen von Einzeldosiervorgängen und Einzelrücklaufvorgängen und
- Fig. 8: ein Ablaufdiagramm für eine bevorzugte Vorgehensweise beim Betrieb des erfindungsgemäßen Dosiersystems.

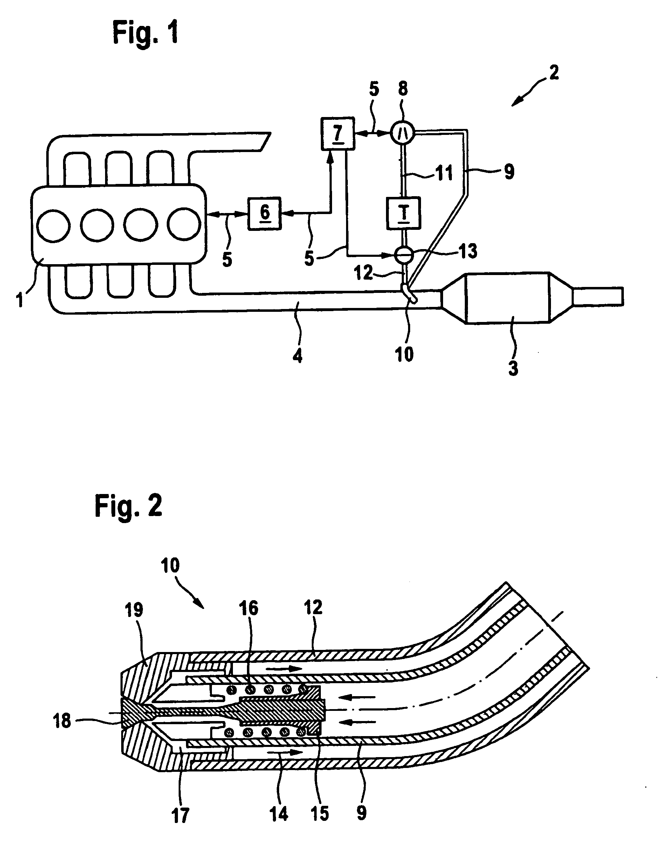

In Fig. 1 ist schematisch eine Brennkraftmaschine 1 eines Kraftfahrzeugs mit einem zugeordneten Abgassystem und einem zugeordneten Dosiersystem 2 für ein Reduktionsmittel dargestellt, wobei das Abgassystem eine Abgasleitung 4 mit einem darin angeordneten Abgaskatalysator 3 umfasst. Das Dosiersystem 2 dient der dosierten Abgabe des Reduktionsmittels in das Abgassystem stromauf des Abgaskatalysators 3. Vorzugsweise ist die Brennkraftmaschine 1 als Dieselmotor ausgebildet, und der Abgaskatalysator 3 ist als Stickoxidreduktionskatalysator, vorzugsweise als so genannter SCR-Katalysator zur selektiven Reduktion von im Abgas des Dieselmotors 1 enthaltenen Stickoxiden (NOx) ausgeführt. Für das Abgassystem sind vorzugsweise weitere, hier nicht näher dargestellte Komponenten vorgesehen. Beispielsweise können zusätzliche reinigungswirksame Bauteile wie ein weiterer Abgaskatalysator oder ein Partikelfilter sowie Abgas- und Temperatursensoren zur Unterstützung des Betriebs des Abgassystems vorgesehen sein. Wird mittels eines vor, nach oder im Abgaskatalysator 3 angeordneten Temperatursensors festgestellt, dass dieser den Temperaturbereich seiner Wirksamkeit verlassen hat, so wird vorzugsweise eine Abgabe von Reduktionsmittel ins Abgas unterbunden. Beispielsweise kann im Zusammenhang mit einer thermischen Regeneration eines dem Abgaskatalysator 3 vorgeschalteten Partikelfilters der Abgaskatalysator sich derart aufheizen, dass zugeführtes Reduktionsmittel unwirksam ist. In diesem Fall wird die Abgabe von Reduktionsmittel ins Abgas ebenso unterbunden, wie bei einer zu starken Abkühlung des Abgaskatalysators, etwa unter 180 °C.

Entsprechend der bevorzugten Ausführung des Abgaskatalysators 3 als SCR-Katalysator ist das Dosiersystem 2 zur Abgabe eines hinsichtlich der Entfernung von NOx geeigneten Reduktionsmittels ausgebildet. Obschon das Dosiersystem 2 auch zur Dosierung von Kraftstoff oder anderen flüssigen organischen Reduktionsmitteln, beispielsweise zur Unterstützung einer Regeneration eines Partikelfilters geeignet ist, wird nachfolgend davon ausgegangen, dass es sich bei dem Reduktionsmittel um eine wässrige Harnstoff-Lösung, nachfolgend abgekürzt als Lösung bezeichnet, handelt. Hierfür umfasst das Dosiersystem 2 einen Tank T, der über eine Leitung 11 mit einer Dosierpumpe 8 verbunden ist. Über eine Vorlaufleitung 9 kann von der Dosierpumpe 8 mengenmäßig kontrolliert und bedarfsgerecht Lösung zu einem Dosierventil 10 gefördert werden. Über das Dosierventil 10 erfolgt eine fein verteilte Abgabe der Lösung ins Abgas. Von der Dosierpumpe 8 zum Dosierventil 10 geförderte und nicht ins Abgas abgegebene Lösung wird über eine Rücklaufleitung 12 zum Tank T zurückgeleitet.

Eine mengenmäßig kontrollierte Abgabe der Lösung ins Abgas wird von einem Dosiersteuergerät 7 gesteuert, welches hierfür die Dosierpumpe 8 sowie eine in der Rücklaufleitung 12 angeordnete Steuerventilanordnung 13 ansteuert, worauf weiter unten näher eingegangen wird.

Zur Steuerung bzw. Erfassung des Motorbetriebs ist ein elektronisches Motorsteuergerät 6 vorgesehen. Das Motorsteuergerät 6 erhält einerseits Informationen über maßgebliche Zustandsgrößen wie z.B. Drehzahl, Temperaturen, Drücke von entsprechenden Sensoren bzw. Fühlern und kann andererseits Steuersignale als Einstellgrößen an Aktuatoren wie z.B. ein AGR-Ventil oder einen Abgasturbolader ausgeben, wobei die entsprechenden Bauteile der Übersichtlichkeit halber nicht dargestellt sind. Weiter ist das Motorsteuergerät 6 in der Lage, eine Einspritzung von Kraftstoff bedarfsgerecht einzustellen. Hierfür kann das Motorsteuergerät 6 auf abgespeicherte Kennfelder oder Berechnungsroutinen zurückgreifen.

In analoger Weise wird eine Erfassung und Einstellung von Betriebs- und Zustandsgrößen des Abgassystems und insbesondere des SCR-Katalysators 3 vorgenommen. Diese Aufgabe kann von einem separaten Steuergerät oder vom Dosiersteuergerät 7 durchgeführt werden. Nachfolgend wird jedoch davon ausgegangen, dass dies ebenfalls vom Motorsteuergerät 6 übernommen wird.

Das Motorsteuergerät 6 ermittelt vorzugsweise auf der Basis von ihm vorliegenden Daten betreffend beispielsweise Ansaugluftmassenstrom, Kraftstoffeinspritzdruck, Steuerzeiten der Kraftstoffeinspritzung, AGR-Rate, Ladedruck, Ansauglufttemperatur und gegebenenfalls weiteren Größen eine NOx-Rohemission des Motors 1. Die genannten Größen können direkt aus Sensorsignalen oder indirekt aus Kennlinien oder Kennfeldern oder durch im Motorsteuergerät 6 abgespeicherte Berechnungsroutinen ermittelt werden. Vorzugsweise ist die Zuordnung von NOx-Rohemissionswerten zu den hierfür maßgeblichen Größen ebenfalls in Kennlinien oder Kennfeldern abgespeichert. Ferner wird aus vorliegenden Informationen betreffend den Betriebszustand des Abgassystems aus hierfür vorgesehenen Kennfeldern ein aktueller Wert des NOx-Umsatzvermögens des SCR-Katalysators 3 ermittelt.

Aus den vorliegenden Informationen über die NOx-Rohemissionswerte und das NOx-Umsatzvermögen des SCR-Katalysators 3 wird eine Soll-Dosiermenge der Lösung ermittelt, mit welcher sich eine vorteilhafte, insbesondere eine möglichst hohe NOx-Verminderung erzielen lässt. Die Information betreffend die Soll-Dosiermenge wird dem Dosiersteuergerät 7 übermittelt, welches die Dosierpumpe 8 für eine vorgegebene Förderleistung ansteuert.

Typischerweise führt die Dosierpumpe 8 in rascher, gleichmäßiger und vorzugsweise konstanter Folge Einzel-Fördervorgänge mit jeweils zumindest annähernd konstanter Fördermenge aus. Die Förderleistung der Dosierpumpe kann 8 durch eine Anpassung der Pumpfrequenz bzw. der Frequenz von EinzelFördervorgängen und/oder durch eine Anpassung der Fördermenge der Einzel-Fördervorgänge verändert werden. Vorzugsweise wird jedoch mit einer konstanten Einzelfördermenge und/oder einer konstanten Pumpfrequenz bzw. mit einem im zeitlichen Mittel konstanten Soll-Durchsatz gearbeitet. Es kann jedoch auch eine unregelmäßige zeitliche Abfolge von Einzel-Fördervorgängen vorgesehen sein. Nachfolgend wird davon ausgegangen, dass die Dosierpumpe 8 als Konstanthub-Kolbenpumpe oder als Membranpumpe ausgebildet ist und intermittierend derart arbeitet, dass mit einer Pumpfrequenz von vorzugsweise etwa 0,2 Hz bis 60 Hz, besonders bevorzugt mit einer Pumpfrequenz von 5 Hz bis 10 Hz, Einzelfördervorgänge erfolgen, mit denen jeweils eine Einzelfördermenge der Lösung zum Dosierventil 10 gefördert wird. Diese bevorzugte Ausführungsform erlaubt eine genaue Dosierung des Reduktionsmittels.

Allgemein sind zur Datenübermittlung Datenleitungen 5 vorgesehen, welche in Form von unidirektionalen oder bidirektionalen Signalleitungen vorliegen können. Insbesondere sind das Motorsteuergerät 6 und das Dosiersteuergerät 7 über eine vorzugsweise als so genannter CAN-Bus ausgeführte Datenleitung 5 miteinander verbunden. Ferner sind Datenleitungen vom Dosiersteuergerät 7 zur Dosierpumpe 8 und zur Steuerventilanordnung 13 vorgesehen, über welche diese angesteuert werden.

Das Dosierventil 10 ist vorzugsweise als federbelastetes Einspritzventil ausgebildet, welches selbsttätig bei Erreichen eines durch die Dimensionierung vorgegebenen Dosierdrucks der Lösung öffnet bzw. schließt. Auf eine elektrische Ansteuerung zur Betätigung und entsprechende Betätigungselemente wie beispielsweise eine Spule kann daher verzichtet werden. Nachfolgend wird unter Bezug auf Fig. 2 eine bevorzugte Ausführungsform des Dosierventils 10 näher erläutert.

Das in Fig. 2 dargestellte Dosierventil 10 ist vorzugsweise als nach außen öffnendes Einspritzventil ausgebildet und weist einen Schließkörper 19 auf, welcher als Aufnahme und Führung für ein Ventilelement 18 dient. Das Ventilelement 18 ist endseitig etwa kegelförmig erweitert, so dass sich in Zusammenwirkung mit einer entsprechend geformten Ventilöffnung 20 ein Dichtsitz ergibt. Eine Schließfeder 16, die sich am Schließkörper 19 und an einem Widerlager 15 abstützt, hält das Ventilelement 18 in der dargestellten Schließstellung. Zum Ventilelement 18 ist die Vorlaufleitung 9 geführt, welche von der Rücklaufleitung 12 ringförmig umschlossen ist. Über die Vorlaufleitung 9 zugeführte Lösung kann das Ventilelement 18 umströmen und über einen im Schließkörper 19 angeordneten Verbindungskanal 17 in die Rücklaufleitung 12 gelangen und abgeleitet werden, wodurch sich eine Kühlwirkung für das Dosierventil 10 ergibt. Der Verbindungskanal 17 ist vorzugsweise nahe an der Ventilöffnung 20 angeordnet. Auf diese Weise kann das im eingebauten Zustand von Abgas umströmte Dosierventil 10 bis zur Spitze hin wirksam gekühlt werden. Die Strömungsrichtung ist zur Verdeutlichung mit Pfeilen 14 gekennzeichnet.

Wenn infolge des Dosierdrucks der über die Vorlaufleitung 9 dem Dosierventil 10 zugeführten Lösung die Schließkraft der Schließfeder 16 überschritten wird, so hebt das Ventilelement 18 vom Dichtsitz ab und gibt die Ventilöffnung frei, und die Lösung wird abgespritzt. Das Dosierventil 10 ist bezüglich der vom Druck beaufschlagten Flächen und der Schließfeder 16 so abgestimmt, dass eine Öffnung nur oberhalb eines Mindestwerts für den Dosierdruck öffnet. Dieser liegt vorzugsweise so hoch, dass eine Dampfblasenbildung in der Vorlaufleitung 9 selbst bei einer auf über 180 °C erhitzten Lösung vermieden wird. Entsprechend einer vorteilhaften Dimensionierung beträgt der für eine Öffnung des Dosierventils 10 maßgebende Dosierdruck etwa 10 bar.

Es versteht sich, dass, gegebenenfalls mit geringen Modifikationen des Dosierventils 10, auch eine umgekehrte Richtung von vorlaufender und rücklaufender Lösung vorgesehen sein kann, ohne dass die Funktion des Dosierventils 10 dadurch beeinträchtigt ist. Im Falle einer umgekehrten koaxialen Anordnung sind Vorlaufleitung 9 und Rücklaufleitung 12 derart vertauscht, dass die Rücklaufleitung 9 von der Vorlaufleitung 12 wenigstens abschnittsweise ringförmig umschlossen ist. Jedenfalls ist eine wenigstens abschnittsweise koaxiale Anordnung von Rücklaufleitung 9 von der Vorlaufleitung 12 bevorzugt.

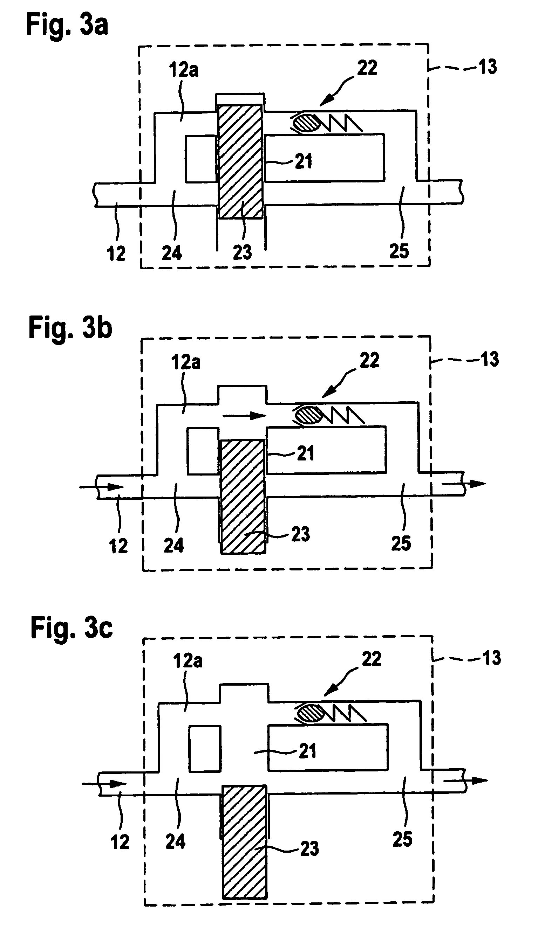

Damit eine jeweilige Einzelfördermenge in einem korrespondierenden Einzeldosiervorgang ins Abgas abgegeben werden kann, muss der für eine Öffnung des Dosierventils 10 maßgebende Dosierdruck in der Vorlaufleitung 9 erreicht bzw. überschritten werden. Dies wird erfindungsgemäß dadurch erreicht, dass die Rücklaufleitung 12 abgesperrt wird, so dass deren Durchströmung verhindert ist. Dadurch kann sich der für eine Öffnung des Dosierventils 10 maßgebende Dosierdruck aufbauen, das Ventilelement 18 gibt die Ventilöffnung 20 frei und die Einzelfördermenge wird in einem Einzeldosiervorgang ins Abgas abgegeben. Wird hingegen die Rücklaufleitung 12 nicht auf derartige Weise abgesperrt, so kann die in einem Einzelfördervorgang der Dosierpumpe 8 zum Dosierventil 10 geförderte Einzelfördermenge in einem Einzelrücklaufvorgang über die Rücklaufleitung 12 wieder zurück in den Tank T geleitet werden. Bei der hier diskutierten bevorzugten Ausführungsform des Dosiersystems 2 ist die Stellung der in der Rücklaufleitung 12 angeordneten und vom Dosiersteuergerät 7 entsprechend ansteuerbaren Steuerventilanordnung 13 maßgebend für die Tatsache, ob ein Einzeldosiervorgang oder ein Einzelrücklaufvorgang erfolgt. Die zu dosierende Reduktionsmittelmenge wird im Zusammenhang mit der Größe einer Einzelfördermenge und der Pumpfrequenz über das Verhältnis von Einzeldosiervorgängen zu Einzelrücklaufvorgängen bestimmt. Dadurch können Anpassungen der Pumpfrequenz an die jeweils geforderte Dosiermenge vermieden werden. Nachfolgend wird unter Bezug auf die Figuren 3a bis 3c auf eine bevorzugte erste Ausführungsform einer Steuerventilanordnung 13 und deren Funktion eingegangen.

Fig. 3a zeigt die in der Rücklaufleitung 12 angeordnete Steuerventilanordnung 13 in einer nachfolgend als Dosierstellung bezeichneten Stellung, in welcher die Rücklaufleitung 12 abgesperrt ist. Die Steuerventilanordnung 13 umfasst einen zur Rücklaufleitung 12 parallel geschalteten Bypassleitungsabschnitt 12a, der an einer Abzweigstelle 24 von der Rücklaufleitung 12 abzweigt und weiter stromabwärts an einer Einmündestelle 25 wieder in diese einmündet. Weiter ist zwischen der Abzweigestelle 24 und der Einmündestelle 25 eine Kurzschlussleitung 21 vorgesehen, über welche der Bypassleitungsabschnitt 12a mit der Rücklaufleitung 12 verbunden ist. Stromab des Abzweigs der Kurzschlussleitung 21 ist im Bypassleitungsabschnitt 12a ferner ein federbelastetes Druckhalteelement 22 angeordnet, auf dessen Funktion weiter unten näher eingegangen wird. Ein beweglicher Ventilschieber 23 kann derart angesteuert in der Kurzschlussleitung 21 bewegt werden, dass wahlweise entweder der Bypassleitungsabschnitt 12a und/oder die Rücklaufleitung 12 abgesperrt oder freigegeben sind, wodurch unterschiedliche Funktionen realisiert werden, was nachfolgend näher erläutert wird.

In der in Fig. 3a dargestellten Dosierstellung der Steuerventilanordnung 13 bzw. des Ventilschiebers 23 sind sowohl der Bypassleitungsabschnitt 12a als auch die Rücklaufleitung 12 abgesperrt. Ein Rücklauf von Lösung vom Dosierventil 10 zum Tank T ist somit verhindert. Eine von der Dosierpumpe 8 in einem Einzelfördervorgang geförderte Einzelfördermenge ist somit daran gehindert, durch die Dosierventil 10 zum Tank T gefördert zu werden. Dadurch erfolgt ein Druckaufbau in der Vorlaufleitung 9, dem Dosierventil 10 und in dem bis zur Steuerventilanordnung 13 geführten Leitungsabschnitt der Rücklaufleitung 12. Der Druckanstieg überwindet infolge einer mangelnden Kompressionsfähigkeit der Lösung bzw. einer mangelnden Ausdehnungsfähigkeit der durchströmbaren Leitungssysteme den für die Öffnung des Dosierventils 10 maßgebenden Dosierdruck, so dass die Einzelfördermenge in einem Einzeldosiervorgang ins Abgas abgegeben wird. Damit ist wiederum ein Druckabfall verbunden, der zum Schließen des Dosierventils 10 führt. Bei unveränderter Stellung der Steuerventilanordnung 13 wird eine von der Dosierpumpe 8 in einem weiteren Einzelfördervorgang geförderte Einzelfördermenge in einem weiteren Einzeldosiervorgang ins Abgas abgegeben. Ist dies aufgrund der vom Motorsteuergerät 6 ermittelten Soll-Dosiermenge für die Lösung nicht mehr erwünscht, so steuert das Dosiersteuergerät 7 die Steuerventilanordnung 13 derart an, dass vom Ventilschieber 23 der Bypassleitungsabschnitt 12a freigegeben wird. Fig. 3b zeigt die Steuerventilanordnung 13 in der sich dadurch ergebenden Stellung.

In der in Fig. 3b dargestellten Stellung der Steuerventilanordnung 13, nachfolgend als Rücklaufstellung bezeichnet, ist zwar vom Ventilschieber 23 der Bypassleitungsabschnitt 12a freigegeben, nicht jedoch der parallel hierzu angeordnete Abschnitt der Rücklaufleitung 12, welcher nach wie vor abgesperrt ist. In der Rücklaufstellung kann die in einem Einzelfördervorgang geförderte Einzelfördermenge in einem korrespondierenden Einzelrücklaufvorgang über den Bypassleitungsabschnitt 12a und weiter über die Rücklauflaufleitung 12 zum Tank T gefördert werden. Hierfür ist jedoch ein Rücklaufdruck zu überwinden, der durch eine Haltekraft des Druckhalteelements 22 bestimmt ist. Damit der Einzelrücklaufvorgang wie vorgesehen erfolgen kann, ist die Haltekraft des Druckhalteelements 22 niedriger eingestellt als die Schließkraft der Schließfeder 16 des Dosierventils 10. Vorzugsweise ist die Haltekraft jedoch ausreichend groß, um ein Sieden und damit eine Dampfblasenbildung auch bei erhöhten Temperaturen von beispielsweise etwa 160 °C der Lösung zu verhindern. Vorzugsweise ist die Haltekraft so eingestellt, dass das Druckhalteelement 22 bei einem Rücklaufdruck von etwa 5 bar öffnet. Auf diese Weise ist gewährleistet, dass beim normalen Betrieb des Dosiersystems 2 zumindest zwischen Dosierpumpe 8 und Steuerventilanordnung 13 ständig ein Überdruck für die Lösung derart vorhanden ist, dass ein störendes Sieden bzw. eine Dampfblasenbildung auch bei erhöhten Temperaturen bis etwa 160 °C bis 180°C verhindert ist.

Vorzugsweise ist für die Steuerventilanordnung 13 eine dritte Stellung vorgesehen, welche in Fig. 3c dargestellt ist. In dieser dritten Stellung, nachfolgend als Entlastungsstellung bezeichnet, gibt der Ventilschieber 23 sowohl den Bypassleitungsabschnitt 12a als auch die Rücklaufleitung 12 frei. Die Entlastungsstellung wird vorzugsweise bei einem Stillsetzen des Dosiersystems 2 bzw. der Dosierpumpe 8 eingestellt. Da vorzugsweise in der Rücklaufleitung 12 stromab der Steuerventilanordnung 13 keine weiteren strömungshemmenden Drosselstellen vorgesehen sind, ist in der Entlastungsstellung das gesamte Dosiersystem 2 druckentlastet. Auf diese Weise können Beschädigungen des Dosiersystems 2 infolge eines Einfrierens von noch vorhandener Lösung vermieden werden. Als zusätzliche Frostschutzmaßnahme können ein Leerblasen des Systems mit Luft und/oder eine insbesondere elektrische Beheizung vorgesehen sein. Im Fall einer elektromagnetisch betätigbaren Steuerventilanordnung 13 ist für diesen Zweck auch eine Bestromung einer entsprechenden Magnetspule vorteilhaft. Eine elektrische Beheizung als Auftauhilfe ist besonders vorteilhaft.

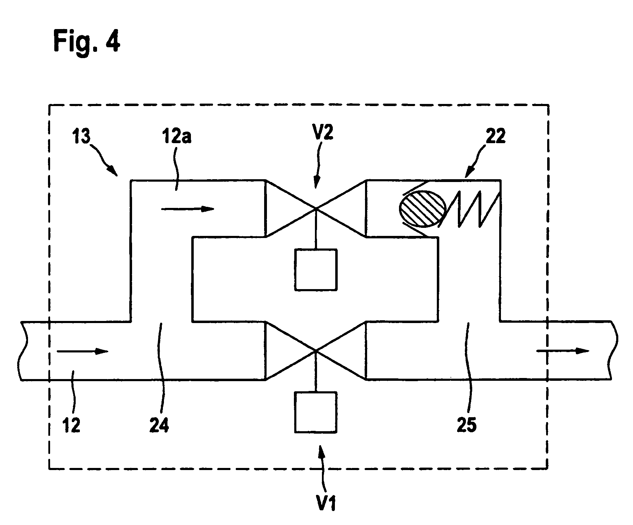

Anstelle der in den Fig. 3a bis 3c dargestellten Ausführungsform einer Steuerventilanordnung 13, sind auch andere Ausführungsformen möglich. In Fig. 4 ist beispielhaft und lediglich schematisch eine zweite vorteilhafte Ausführungsform einer Steuerventilanordnung 13 dargestellt. Dabei sind die Bauteile der Fig. 4 soweit sie mit denen der Fig. 3a bis 3c übereinstimmen mit denselben Bezugszeichen gekennzeichnet. Die Rolle des Ventilschiebers 23 der in den Fig. 3a bis 3c dargestellten Steuerventilanordnung 13 zur Einstellung der Dosier-, Rücklauf- und Entlastungsstellung übernehmen in der in Fig. 4 dargestellten Ausführungsform zwei Schaltventile V1, V2, wodurch die Kurzschlussleitung 21 entfällt. Die Ventile V1, V2 können beispielsweise als Magnetventile ausgebildet sein. Bevorzugt ist eine Ausführungsform, bei der die als Magnetventile ausgeführten Schaltventile V1, V2 in stromlosem Zustand geöffnet sind. In einer besonders bevorzugten Ausführungsform sind die Schaltventile V1, V2 als sogenannte Proportionalventile ausgeführt. Dies hat den Vorteil, dass Öffnungs- bzw. Schließkraft und damit der für eine Öffnung bzw. Schließung maßgebende Druck einstellbar ist. Zur Vermeidung von Wiederholungen wird nachfolgend nur auf die hinsichtlich der Einstellung von Dosier-, Rücklauf- und Entlastungsstellung relevanten Unterschiede eingegangen.

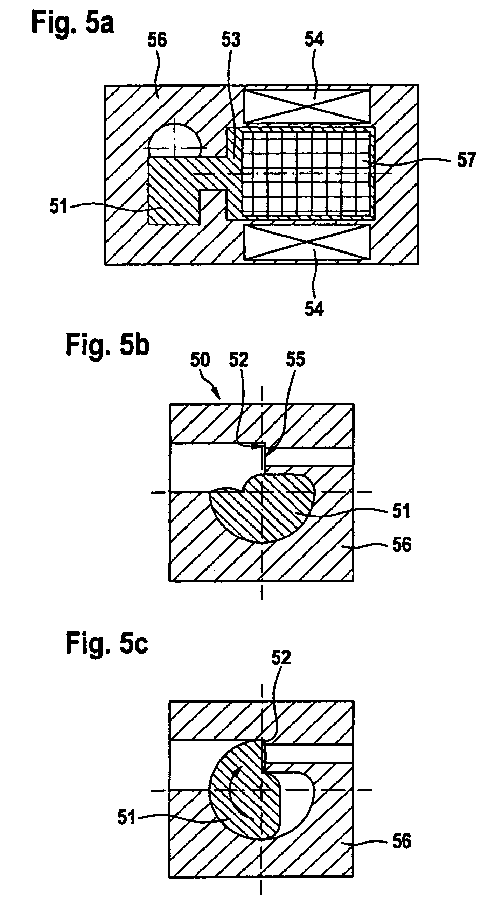

Die der Fig. 3a entsprechende Dosierstellung wird realisiert, indem sowohl das in der Rücklaufleitung 12 angeordnete Schaltventil V1 als auch das im Bypassleitungsabschnitt 12a angeordnete Schaltventil V2 geschlossen gehalten werden, wodurch die entsprechenden Leitungen abgesperrt sind. Die Rücklaufstellung wird eingenommen, wenn das Schaltventil V2 geöffnet und das Schaltventil V1 geschlossen ist. In der Entlastungsstellung sind beide Schaltventile V1, V2 geöffnet. Eine weitere Ausführungsform der Steuerventilanordnung ist in den Figuren 5a bis 5c dargestellt. Hierbei umfasst die Steuerventilanordnung ein in der Rücklaufleitung angeordnetes Proportionalventil 50. Das Proportionalventil 50 weist einen um eine Achse 53 drehbar gelagerten Schließkörper 51, einen Ventilsitz 52 und eine elektrische, ansteuerbare Spule 54 auf. Mit Hilfe der Spule 54 ist ein Moment auf einen in der Achse 53 angeordneten Eisenkern 57 und damit auf den Schließkörper 51 einstellbar. Wenn ein ausreichend großes Moment eingestellt ist, wird der Schließkörper 51 gegen den Druck des Reduktionsmittels auf den Ventilsitz 52 gepresst, und die Rücklaufleitung ist gesperrt.

Ein Gehäuse 56 ist vorzugsweise als Kunststoffteil ausgeführt, wobei die Spule 54 bei der Herstellung in die Form des Gehäuses 56 eingesetzt wird ("umspritzte Spule"). Nach dem gleichen Verfahren wird ein Eisenkern 57 in die Achse 53 des Schließkörpers 51 eingebracht.

In Fig. 5c ist die Steuerventilanordnung in der Dosierstellung und in der Rücklaufstellung dargestellt. In der Dosierstellung der Steuerventilanordnung wird die Spule 54 derart angesteuert, dass das von der Spule 54 auf den Schließkörper 51 ausgeübte Moment ausreichend groß ist, um die Rücklaufleitung selbst bei Anliegen des Dosierdrucks zu sperren. Die Ansteuerung der Spule 54 erfolgt dazu bevorzugt mit Nennleistung. In der Rücklaufstellung der Steuerventilanordnung hingegen wird die Spule 54 mit Teillast angesteuert, so dass das auf den Schließkörper 51 ausgeübte Moment und damit die Schließkraft verringert ist. Das Ventil öffnet vorzugsweise bei Anliegen des Rücklaufdrucks, so dass ein Leckstrom entsteht. Das Reduktionsmittel wird dadurch weiter unter Druck gehalten. Der Leckstrom führt zu einem zumindest kurzfristigen Abheben des Schließkörpers 51 vom Ventilsitz 52. In einem modifizierten Ausführungsbeispiel kann diese Minimalbewegung für Diagnosezwecke genutzt werden. In Fig. 5b ist die Steuerventilanordnung in einer Entlastungsstellung gezeigt. Die Spule 54 ist dabei stromlos geschaltet, und der Schließkörper 51 ist so zur Seite gedreht, dass ein Durchströmungsquerschnitt 55 nahezu vollständig freigegeben ist. Dadurch ist ein mechanischer Widerstand im Leitungssystem minimiert, und die Rücklaufleitung ist druckentlastet, so dass ein Druckausgleich ermöglicht ist. Die Steuerventilanordnung wird vorzugsweise nach einer Stillsetzung der Dosierpumpe in die Entlastungsstellung versetzt. Bei einer nachfolgenden Volumenänderung des Reduktionsmittels, beispielsweise infolge von Einfrieren oder Wärmedehnung, kann sich das Reduktionsmittel über die Steuerventilanordnung hinweg ausdehnen, wodurch eine mechanische Belastung des Systems und insbesondere der Steuerventilanordnung verringert ist.

In einem modifizierten, nicht dargestellten Ausführungsbeispiel ist zwischen Schließkörper und Gehäuse ein Federelement angeordnet, durch das der Schließkörper bei stromlos geschalteter Spule in die Entlastungsstellung versetzt wird.

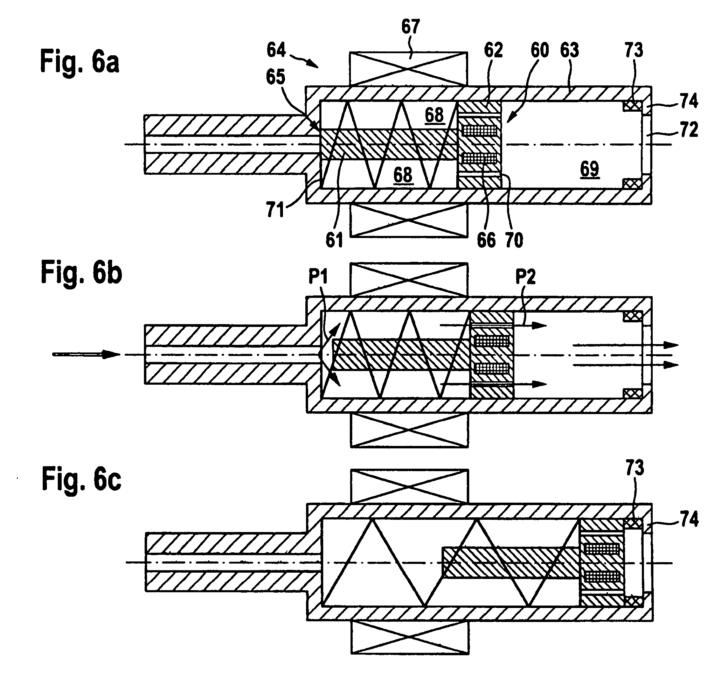

Eine weitere Ausführungsform der Steuerventilanordnung ist in den Figuren 6a bis 6c in verschiedenen Stellungen dargestellt. In dieser Ausführungsform umfasst die Steuerventilanordnung 13 ein Proportionalventil 64 mit einem Schließkörper in Form eines Kolbens 60, einem Ventilsitz 65 und einem elektrischen, ansteuerbaren Magneten 67. Mit Hilfe des Magneten 67 ist eine Kraft auf einen in dem Kolben 60 angeordneten Eisenkern 66 einstellbar. Wenn eine ausreichend große Kraft eingestellt ist, wird der Kolben 60 gegen den Druck des Reduktionsmittels auf den Ventilsitz 65 gepresst, und die Rücklaufleitung ist gesperrt.

Der Kolben ist in einem Gehäuse 63 angeordnet und weist einen ersten Abschnitt 61 sowie einen zweiten Abschnitt 62 auf. Der zweite Abschnitt 62 steht mit einer Innenwandung des Gehäuses 63 in Kontakt, so dass das Gehäuse 63 durch den zweiten Abschnitt in eine erste Gehäusekammer 68 und eine zweite Gehäusekammer 69 unterteilt ist. Der erste Abschnitt 61 ist zylinderförmig mit einem kleineren Durchmesser als der zweite Abschnitt und als das Gehäuse 63 ausgestaltet. In dem zweiten Abschnitt des Kolbens ist der Eisenkern 66 angeordnet. Darüber hinaus weist der zweite Abschnitt 62 durchströmbare Öffnungen 70 auf. Über eine Zug-Druck-Feder 71 ist der Kolben 60 mit dem Gehäuse 63 verbunden.

Am austrittseitigen Ende der zweiten Gehäusekammer 69 ist ein ringförmiges Anschlagelement 73 angeordnet, durch das ein Verfahrweg des Kolbens 60 in Richtung der Austrittsöffnung 72 begrenzt ist. Dadurch ist insbesondere gewährleistet, dass unter allen Betriebszuständen ein Freiraum zwischen dem Kolben 60 und einer die zweite Gehäusekammer 69 am austrittseitigen Ende begrenzen Wandung 74 bestehen bleibt. Insbesondere wird durch das Anschlagselement 73 ein Kontakt zwischen dem Kolben 60 und der Wandung 74 und damit verbunden ein Verschluss der Öffnungen 70 vermieden.

Der elektrische Magnet 67 ist ringförmig um das Gehäuse 63 herum positioniert und über nicht dargestellte Leitungen ansteuerbar. In stromdurchflossenem Zustand wird durch den Magnet eine Kraft auf den Eisenkern im zweiten Abschnitt 62 des Kolbens 60 in axialer Richtung des Kolbens 60 ausgeübt. In Fig. 6a ist die Steuerventilanordnung in der Dosierstellung dargestellt. Dabei wird der Magnet 67 derart angesteuert, dass der Kolben 60 auf den Ventilsitz 65 gepresst wird. Die durch den Magneten 67 erzeugte Schließkraft ist dabei ausreichend groß, dass die Rücklaufleitung selbst bei Anliegen des Dosierdrucks in der Leitung gesperrt ist.

In Fig. 6b ist die Steuerventilanordnung in der Rücklaufstellung angeordnet. Dabei ist die durch den Magneten 67 erzeugte Schließkraft verringert, so dass der Kolben bei Anliegen des Rücklaufdrucks abhebt. In Fig. 6b ist der Kolben 60 im Moment des Abhebens dargestellt. Dadurch ist ein Leckstrom in Richtung der Pfeile P1 von der Leitung in die erste Gehäusekammer 68 ermöglicht. Das Reduktionsmittel ist anschließend in Richtung der Pfeile P2 durch die Öffnungen 70 in die zweite Gehäusekammer 69 führbar und von dort aus über eine Austrittsöffnung 72 und die Rücklaufleitung zum Tank transportierbar.

In Fig. 6c ist die Steuerventilanordnung in einer Entlastungsstellung dargestellt. Der Magnet 67 ist dabei stromlos geschaltet, so dass von dem Magneten 67 keine Kraft auf den Kolben 60 ausgeübt wird. Bei einer Volumenänderung des Reduktionsmittels beispielsweise infolge Einfrierens lässt sich der Kolben mit dem Reduktionsmittel in Längsrichtung bewegen, so dass dem Reduktionsmittel bestenfalls ein geringer mechanischer Widerstand entgegengesetzt ist. Über die Zug-Druck-Feder wird der Kolben 60 nach dem Auftauen des Reduktionsmittels wieder in den Wirkungsbereich des Magneten 67 gezogen.

Die beiden zuletzt beschriebenen Ausführungsformen zeichnen sich insbesondere dadurch aus, dass keine Schaltwege zum Umschalten zwischen Dosierstellung und Rücklaufstellung erforderlich sind und dass ein Umschalten zwischen diesen Stellungen bei minimalen Schaltzeiten erfolgen kann. Darüber hinaus ist eine Gefahr von Beschädigungen bei einem Einfrieren des Reduktionsmittels minimiert. Ein weiterer Vorteil der beiden zuletzt beschriebenen Ausführungsformen liegt in einem besonders einfachen Aufbau mit wenigen bewegten Teilen.

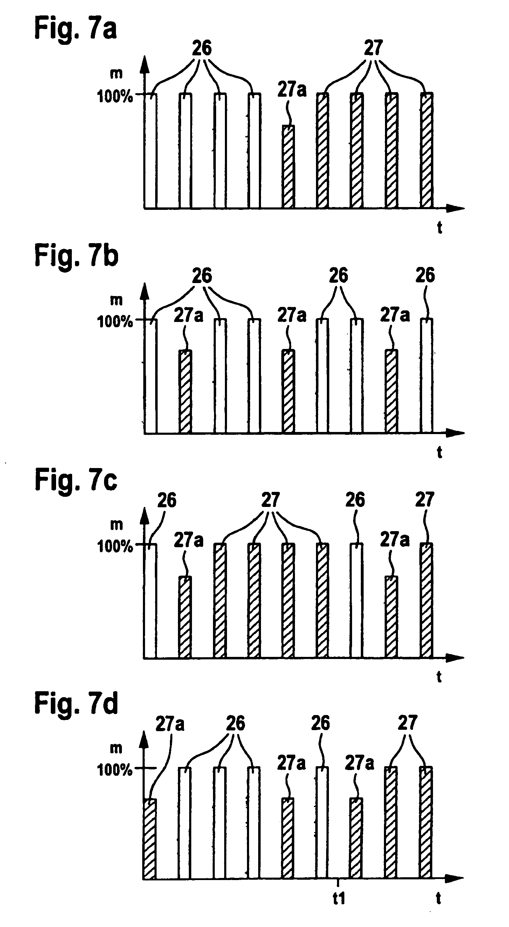

Nachfolgend werden unter Bezug auf die Figuren 7a bis 7d beispielhaft Folgen von aufeinanderfolgenden Einzeldosiervorgängen und Einzelrücklaufvorgängen erläutert.

Im Zeitdiagramm der Fig. 7a ist beispielhaft eine im festen Abstand von beispielsweise 200 ms durchgeführte Folge von Einzelfördervorgängen der mit konstanter Pumpfrequenz arbeitenden Dosierpumpe 8 dargestellt. Dabei ist ein sprunghafter Wechsel von einem Rücklaufbetrieb mit verstärkter Kühlwirkung auf einen Dosierbetrieb dargestellt. Als Einzelrücklaufvorgänge wirksame Einzelfördervorgänge im Kühlbetrieb sind durch offene Balken 26 gekennzeichnet. Als Einzeldosiervorgänge wirksame Einzelfördervorgänge im Dosierbetrieb sind durch schraffierte Balken 27 und 27a gekennzeichnet. Es versteht sich dabei, dass beispielsweise zur Veränderung des Durchsatzes eine Veränderung der Pumpfrequenz bzw. des zeitlichen Abstands der Einzelfördervorgänge vorgesehen sein kann.

Die Aufteilung zwischen Einzelrücklaufvorgängen und Einzeldosiervorgängen erfolgt wie oben beschrieben durch eine entsprechende Ansteuerung der Steuerventilanordnung 13 derart, dass die vom Motorsteuergerät 6 ermittelte Soll-Dosiermenge bzw. der Soll-Durchsatz wenigstens annähernd erreicht werden. Dabei werden in den Einzelfördervorgängen jeweils im Wesentlichen die gleichen, durch die Dimensionierung bzw. Einstellung der Dosierpumpe 8 bestimmten Mengen m gefördert. Eine Ausnahme hiervon kann der erste, direkt auf einen Einzelrücklaufvorgang 26 folgende Einzeldosiervorgang 27a bilden. Dies ist überwiegend durch Druckänderungen im Dosiersystem 2 begründet, welche bei einer Umstellung von Rücklauf auf Dosierung auftreten. Typischerweise äußert sich diese in einer Mengenabweichung insbesondere des ersten Einzeldosiervorgangs 27a von anderen, auf den ersten Einzeldosiervorgang 27a folgenden Einzeldosiervorgängen 27. Typischerweise ist die Differenzmenge des ersten Einzeldosiervorgangs 27a als Mindermenge gegenüber der normalen Einzelfördermenge m von 100 % ausgebildet. Je nach Ausgestaltung des Dosiersystems 2 kann jedoch insbesondere der erste Einzeldosiervorgang 27a auch eine Übermenge aufweisen. Erfindungsgemäß wird die systembedingte Differenzmenge des direkt auf einen Einzelrücklaufvorgang 26 folgenden ersten Einzeldosiervorgangs 27a gegenüber anderen Einzeldosiervorgängen 27 bei der Festlegung von Anzahl und Reihenfolge der Einzeldosiervorgänge 27, 27a berücksichtigt. Auf diese Weise wird die Dosiergenauigkeit verbessert. Natürlich ist es ebenfalls möglich, eine gegebenenfalls auftretende Differenzmenge eines jeweiligen zweiten Einzeldosiervorgangs von der Einzelfördermenge zu berücksichtigen. Im Allgemeinen ist diese ist jedoch vernachlässigbar, so dass es ausreicht, nur die Differenzmenge des ersten Einzeldosiervorgangs 27a zu berücksichtigen.

Nachfolgend wird unter Bezug auf die Figuren 7b bis 7d auf beispielhafte Ausgestaltungen von Reihenfolgen für Einzelrücklauf- und Einzeldosiervorgänge bei unterschiedlichen Soll-Dosiermengen bzw. Soll-Durchsätzen eingegangen. Dabei ist vorzugsweise vorgesehen, die Häufigkeit von Wechseln zwischen Einzelrücklaufvorgängen 26 und Einzeldosiervorgängen 27, 27a zu minimieren.

In Fig. 7b ist eine für geringe, etwa 25 % des maximalen Werts ausmachende Soll-Dosiermenge typische Reihenfolge dargestellt. Beträgt beispielsweise die Nennförderleistung der Dosierpumpe 8 und damit der maximale Durchsatz 2000 g/h, so wird bei einer Einzelfördermenge von 0,1 g und einer Pumpfrequenz von etwa 5 Hz die Steuerventilanordnung 13 so angesteuert, dass jeweils zwei Einzelrücklaufvorgänge 26 mit einem Einzeldosiervorgang 27a abwechseln. Dabei wird die vorzugsweise vorab ermittelte Mindermenge des Einzeldosiervorgangs 27a gegenüber aufeinanderfolgenden Einzeldosiervorgängen 27 wie oben beschrieben berücksichtigt. Typischerweise ergibt sich unter anderem auch dadurch bedingt nach einer gewissen Zeit die Notwendigkeit, die genannte Reihenfolge anzupassen.

In Fig. 7c ist eine für hohe, etwa 80 % des maximalen Werts ausmachende Soll-Dosiermenge typische Reihenfolge dargestellt. Beträgt beispielsweise in einem für höhere Dosiermengen ausgelegten Dosiersystem 2 die Nennförderleistung der Dosierpumpe 8 und damit der maximale Durchsatz 6000 g/h, so wird bei einer Einzelfördermenge von 0,33 g und einer Pumpfrequenz von etwa 5 Hz die Steuerventilanordnung 13 so angesteuert, dass jeweils fünf Einzeldosiervorgänge 27, 27a mit einem Einzelrücklaufvorgang 26 abwechseln.

Auf eine Änderung der Soll-Dosiermenge kann sehr rasch reagiert werden, wie beispielhaft im Diagramm von Fig. 7d dargestellt. Dies wird in vorteilhafter Weise dadurch erreicht, dass im Takt der Einzelfördervorgänge die aktuell vom Dosiersteuergerät 7 angeforderte Soll-Dosiermenge abgefragt wird und gegebenenfalls eine Veränderung der Ansteuerung der Steuerventilanordnung 13 vorgenommen wird. In dem in Fig. 7d dargestellten Fall liegt zunächst eine Anforderung für eine geringe Dosiermenge vor, weshalb von vier Einzelfördervorgängen nur einer als Einzeldosiervorgang 27a ausgeführt wird. Wird zum Zeitpunkt t1 aufgrund eines geänderten Betriebszustands der Brennkraftmaschine 1 eine erhöhte Dosiermenge erforderlich, so kann anstelle des für die seitherige geringe Soll-Dosiermenge vorgesehenen Einzelrücklaufvorgangs sofort auf eine Folge von Einzeldosiervorgängen 27a, 27 übergegangen werden.

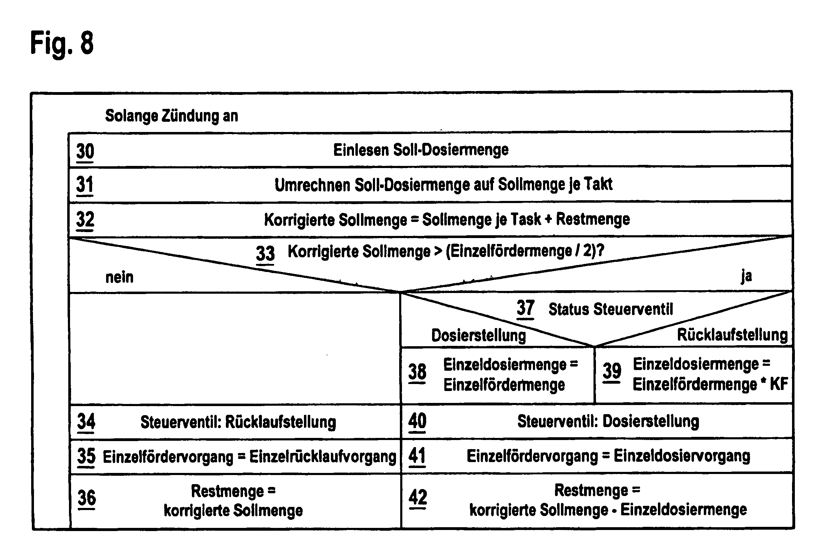

Unter Bezug auf Fig. 8 wird nachfolgend eine besonders bevorzugte Vorgehensweise zur Durchführung des erfindungsgemäßen Dosierverfahrens erläutert.

In Fig. 8 ist ein Ablaufdiagramm mit einer Abfolge von Verfahrensschritten dargestellt, die in einer festen Taktfrequenz von beispielsweise 5 Hz durchlaufen wird. Die Abfolge von Verfahrensschritten wird in der dargestellten Form durchgeführt, solange die Zündung des Kraftfahrzeugs eingeschaltet ist, bzw. solange die Energieversorgung der maßgebenden beteiligten Komponenten vorhanden ist und diese einsatzbereit sind.

Im Schritt 30 der Abfolge wird vom Dosiersteuergerät 7 der vom Motorsteuergerät 6 bereitgestellte Wert für die Soll-Dosiermenge der Lösung eingelesen. Für eine Konkretisierung wird beispielhaft eine Soll-Dosiermenge von 360 g/h angenommen. Durch Umrechnung im Schritt 31 ergibt sich eine Soll-Dosiermenge von 0,02 g je Takt. Im Schritt 32 wird dieser Wert um eine in vorangegangenen Durchläufen aufgelaufene Restmenge korrigiert, welche aus Mindermengen oder Übermengen von ins Abgas zu dosierender Lösung resultiert. Vorliegend wird davon ausgegangen, dass die Restmenge zunächst gleich Null ist. Die sich ergebende korrigierte Sollmenge beträgt daher 0,02 g.

Im Schritt 33 erfolgt sodann eine Abfrage, ob die korrigierte Sollmenge größer als die Hälfte einer Einzelfördermenge eines Einzelfördervorgangs der Dosierpumpe 8 ist. Wird angenommen, dass die Einzelfördermenge 0,1 g beträgt, so wird die Abfrage mit "nein" beantwortet und es wird mit Schritt 34 fortgefahren, in welchem die Steuerventilanordnung 13 in die Rücklaufstellung gebracht wird oder in dieser gehalten wird. Der im Schritt 35 vorgenommene Einzelfördervorgang der Dosierpumpe 8 erfolgt somit als Einzelrücklaufvorgang. Da somit die korrigierte Sollmenge von 0,02 g nicht ins Abgas abgegeben wurde, wird im Schritt 36 die Restmenge auf diesen Wert gesetzt und der Ablauf wird ab Schritt 30 mit Beginn des nächsten Takts erneut gestartet.

Unter der Voraussetzung einer unveränderten Soll-Dosiermenge erfolgt ein weiterer Durchlauf wie geschildert, wobei im Schritt 36 die Restmenge auf 0,04 g gesetzt wird.

Im dritten Durchlauf ergibt sich somit im Schritt 32 eine korrigierte Sollmenge von 0,06 g, weshalb die Abfrage im Schritt 33 mit "ja" beantwortet und im Schritt 37 der Status der Steuerventilanordnung 13 abgefragt wird.

Ergibt die Abfrage, dass die Steuerventilanordnung 13 sich in der Dosierstellung befindet, so bedeutet dies, dass im vorangegangenen Takt ein Einzeldosiervorgang erfolgt ist. Somit ist eine Korrektur der Einzeldosiermenge nicht erforderlich und der Wert für die Einzeldosiermenge wird im Schritt 38 auf den Wert für eine Einzelfördermenge der Dosierpumpe 8 gesetzt. Ergibt die Abfrage im Schritt 37 jedoch, dass die Steuerventilanordnung 13 sich in der Rücklaufstellung befindet, so bedeutet dies, dass im vorangegangenen Takt ein Einzelrücklaufvorgang erfolgt ist. Somit ist eine Korrektur der Einzeldosiermenge erforderlich und der Wert für die Einzeldosiermenge wird im Schritt 39 auf den mit einem Korrekturfaktor KF multiplizierten Wert für eine Einzelfördermenge der Dosierpumpe 8 gesetzt.

Nach erfolgter Festlegung der Einzeldosiermenge im Schritt 38 bzw. 39 wird im nachfolgenden Schritt 40 die Steuerventilanordnung 13 in die Dosierstellung gebracht bzw. in dieser gehalten. Im nächsten Schritt 41 erfolgt der Einzelfördervorgang, der aufgrund der Dosierstellung der Steuerventilanordnung 13 als Einzeldosiervorgang wirksam ist und die Einzeldosiermenge der Lösung wird ins Abgas abgegeben.

Im nachfolgenden Schritt 42 wird die Restmenge aktualisiert, indem die Differenz aus der im Schritt 32 ermittelten korrigierten Sollmenge und der Einzeldosiermenge gebildet wird und es erfolgt mit Beginn des nächsten Takts ein erneuter Einstieg in Schritt 30 des Ablaufs.

Mit Abstellen der Zündung bzw. der Energieversorgung ist vorzugsweise vorgesehen, dass die Steuerventilanordnung 13 in die oben erwähnte Entlastungsstellung gebracht wird.

Mit dem geschilderten bevorzugten Ablauf ist eine sehr hohe Dosiergenauigkeit ermöglicht, wobei durch eine Änderung der Taktfrequenz das Dosiersystem 2 an geänderte Rahmenbedingungen angepasst werden kann. Eine weitere Steigerung der Dosiergenauigkeit ist durch Erfassung der Temperatur der zu dosierenden Lösung und einer Dichtekorrektur ermöglicht. Weiter kann vorgesehen sein, durch Temperatureinwirkung oder anderweitig verursachte Einflüsse bedingte Änderungen der an sich im Wesentlichen konstanten Einzelfördermenge zu berücksichtigen. Hierzu kann eine Temperaturerfassung in der Dosierpumpe 8 vorgesehen sein.

## Patentansprüche

1. Verfahren zum Dosieren eines flüssigen Reduktionsmittels in ein Abgassystem einer Brennkraftmaschine (1), wobei
- von einer Dosierpumpe (8) das Reduktionsmittel zu einem Dosierventil (10) gefördert wird und zum Dosierventil gefördertes Reduktionsmittel wahlweise entweder
- vom Dosierventil (10) in das Abgassystem abgegeben oder
- durch das Dosierventil (10) und durch eine Rücklaufleitung (12) hindurch zu einem Behälter (T) für das Reduktionsmittel geleitet wird,
wobei eine in der Rücklaufleitung (12) angeordnete Steuerventilanordnung (13) zur Abgabe des Reduktionsmittels in das Abgassystem eine Dosierstellung einnimmt, in der die Rücklaufleitung (12) so abgesperrt ist, daß deren Durchströmung verhindert ist, und
wobei die Steuerventilanordnung (13) zur Leitung des zum Dosierventil geförderten Reduktionsmittels durch das Dosierventil (10) und durch die Rücklaufleitung (12) hindurch zu dem Behälter (T) eine Rücklaufstellung einnimmt, in der Reduktionsmittel unter Überwindung eines Gegendrucks durch die Rücklaufleitung (12) in den Behälter (T) strömen kann,
**dadurch gekennzeichnet, daß**
- die Förderung des Reduktionsmittels von der Dosierpumpe zum Dosierventil in rasch aufeinander folgenden, zeitlich voneinander abgesetzten Einzelfördervorgängen erfolgt,
- die Abgabe des zum Dosierventil geförderten Reduktionsmittels vom Dosierventil (10) in das Abgassystem in zeitlich voneinander abgesetzten Einzeldosiervorgängen (27, 27a) bzw.
- die Leitung des zum Dosierventil geförderten Reduktionsmittels durch das Dosierventil (10) und durch die Rücklaufleitung (12) hindurch zu dem Behälter (T) in zeitlich voneinander abgesetzten Einzelrücklaufvorgängen (26) erfolgt,
- wobei die Steuerventilanordnung (13) in der Rücklaufstellung einen Strömungsweg in die Rücklaufleitung (12) schaltet, der bei einem vorgegebenen Rücklaufdruck des Reduktionsmittels eingangseitig der Steuerventilanordnung (13) freigegeben wird.

2. Verfahren nach Anspruch 1,
**dadurch gekennzeichnet, dass**
beim Betrieb der Dosierpumpe (8) für das Reduktionsmittel im Dosierventil (10) dauerhaft ein Überdruck zumindest für das zum Dosierventil (10) geförderte Reduktionsmittel aufrechterhalten wird.

3. Verfahren nach einem der Ansprüche 1 oder 2,
**dadurch gekennzeichnet, dass**
Einzeldosiervorgänge (27, 27a) und Einzelrücklaufvorgänge (26) in vorgebbarer Reihenfolge abwechseln.

4. Verfahren nach Anspruch 3,
**dadurch gekennzeichnet, dass**
bei der Einstellung der Reihenfolge von Einzeldosiervorgängen (27, 27a) und Einzelrücklaufvorgängen (26) zur Erreichung eines Solldurchsatzes eine Differenzmenge eines im direkten Anschluss an einen Einzelrücklaufvorgang (26) erfolgenden ersten Einzeldosiervorgangs (27a) gegenüber anderen, direkt aufeinanderfolgenden Einzeldosiervorgängen (27) berücksichtigt wird.

5. Verfahren nach einem der Ansprüche 1 bis 4,
**dadurch gekennzeichnet, dass**
das in einem Einzelrücklaufvorgang (26) durch das Dosierventil (10) geleitete Reduktionsmittel bis nahe an dessen abgasseitige Spitze geführt wird.

6. Verfahren nach einem der Ansprüche 1 bis 5,
**dadurch gekennzeichnet, dass**
bei einem Stillsetzen der Dosierpumpe (8) die Steuerventilanordnung (13) eine Entlastungsstellung einnimmt, in der die Rücklaufleitung (12) druckentlastet ist.

7. Verfahren nach einem der Ansprüche 1 bis 6,
**dadurch gekennzeichnet, dass**
vor einer Inbetriebnahme der Dosierpumpe (8) die Steuerventilanordnung (13) eine Entlastungsstellung einnimmt, in der die Rücklaufleitung (12) druckentlastet ist.

8. Vorrichtung zum Dosieren eines flüssigen Reduktionsmittels in ein Abgassystem einer Brennkraftmaschine (1), insbesondere zur Anwendung in einem Verfahren nach einem der Ansprüche 1 bis 6, umfassend
- ein Dosierventil (10) zur Abgabe des Reduktionsmittels in das Abgassystem,
- eine Dosierpumpe (8) zur Förderung von Reduktionsmittel zum Dosierventil (10) über eine die Dosierpumpe (8) mit dem Dosierventil (10) verbindende Vorlaufleitung (9), wobei die Dosierpumpe (8) zur Durchführung von rasch aufeinander folgenden, zeitlich voneinander abgesetzten Einzelfördervorgängen für das Reduktionsmittel ausgelegt ist,
- eine vom Dosierventil (10) zu einem Behälter (T) für das Reduktionsmittel geführte Rücklaufleitung (12) und
- eine in der Rücklaufleitung (12) angeordnete Steuerventilanordnung (13), welche derart angesteuert werden kann, dass eine in einem Einzelfördervorgang von der Dosierpumpe(8) zum Dosierventil (10) geförderte Einzelfördermenge wenigstens annähernd vollständig wahlweise in einem Einzeldosiervorgang (27, 27a) vom Dosierventil (10) in das Abgassystem abgegeben oder in einem Einzelrücklaufvorgang (26) durch das Dosierventil (10) hindurch und über die Rücklaufleitung (12) zum Behälter (T) für das Reduktionsmittel zurück geleitet werden kann,
**dadurch gekennzeichnet, dass**
die Steuerventilanordnung (13) in einer Rücklaufstellung einen ersten Strömungsweg in die Rücklaufleitung (12) schaltet, der bei einem vorgegebenen Rücklaufdruck des Reduktionsmittels eingangsseitig der Steuerventilanordnung (13) freigegeben wird.

9. Vorrichtung nach Anspruch 8,
**dadurch gekennzeichnet, dass**
das Dosierventil (10) bei einem vorgegebenem, eingangsseitig des Dosierventils (10) anstehenden Dosierdrucks des Reduktionsmittels eine Ventilöffnung(20) freigibt, so dass Reduktionsmittel ins Abgassystem abgegeben werden kann.

10. Vorrichtung nach Anspruch 9,
**dadurch gekennzeichnet, dass**
das Dosierventil (10) und die Steuerventilanordnung (13) so aufeinander abgestimmt ausgebildet sind, dass der Dosierdruck größer als der Rücklaufdruck ist.

11. Vorrichtung nach einem der Ansprüche 8 bis 10,
**dadurch gekennzeichnet, dass**
die in der Rücklaufleitung (12) angeordnete Steuerventilanordnung (13) in einer Dosierstellung die Rücklaufleitung (12) so absperrt, dass ein Durchströmen der Rücklaufleitung (12) vom Dosierventil (10) zum Behälter (T) verhindert ist.

12. Vorrichtung nach einem der Ansprüche 8 bis 11,
**dadurch gekennzeichnet, dass**
die Steuerventilanordnung (13) in einer Entlastungsstellung insbesondere nach einer Stillsetzung der Dosierpumpe (8) die Rücklaufleitung (12) so freigibt, dass die Rücklaufleitung (12) druckentlastet ist.

13. Vorrichtung nach Anspruch 12,
**dadurch gekennzeichnet, dass**
in der Entlastungsstellung der Steuerventilanordnung (13) die Rücklaufleitung (12) zumindest annähernd vollständig geöffnet ist.

14. Vorrichtung nach einem der Ansprüche 8 bis 13,
**dadurch gekennzeichnet, dass**
die Steuerventilanordnung ein in der Rücklaufleitung angeordnetes Proportionalventil (50, 64) umfasst, bei dem eine Schließkraft einstellbar ist.

15. Vorrichtung nach Anspruch 14,
**dadurch gekennzeichnet, dass**
in der Rücklaufstellung der Steuerventilanordnung die Schließkraft des Proportionalventils (50, 64) derart eingestellt ist, dass das Proportionalventil (50, 64) öffnet, wenn ein Druck des Reduktionsmittels anliegt, der den vorgegebenen Rücklaufdruck übersteigt.

16. Vorrichtung nach einem der Ansprüche 14 bis 15,
**dadurch gekennzeichnet, dass**
das Proportionalventil (50, 64) einen beweglich gelagerten Schließkörper (51, 60), einen Ventilsitz (52, 65) und eine ansteuerbare Kraft- oder Momentenerzeugungseinheit (54, 67) umfasst, wobei der Schließkörper (51, 60) in einer Arbeitsstellung mit dem Ventilsitz (52, 65) in Kontakt steht und wobei über die Kraft- oder Momentenerzeugungseinheit (54, 67) eine Schließkraft oder ein Schließmoment auf den Schließkörper (51, 60) ausgeübt werden kann.

17. Vorrichtung nach Anspruch 16,
**dadurch gekennzeichnet, dass**
der Schließkörper als Drehkolben (51) ausgeführt ist und drehbar in einem Gehäuse (56) der Steuerventilanordnung gelagert ist.

18. Vorrichtung nach Anspruch 17,
**dadurch gekennzeichnet, dass**
eine Momentenerzeugungseinheit eine elektrische Spule (54) umfasst, über die sich in stromdurchflossenem Zustand ein Drehmoment auf einen Eisenkern (57) in einer mit dem Drehkolben (51) verbundenen Achse (53) ausüben lässt.

19. Vorrichtung nach Anspruch 18,
**dadurch gekennzeichnet, dass**
das Gehäuse (56) der Steuerventilanordnung als Kunststoffteil ausgeführt ist und dass die Spule (54) als umspritzte Spule in dem Gehäuse (56) angeordnet ist.

20. Vorrichtung nach einem der Ansprüche 18 oder 19,
**dadurch gekennzeichnet, dass**
die Achse (53) des Drehkolbens (51) als Kunststoffteil ausgeführt ist und dass der Eisenkern (57) als umspritzter Eisenkern in der Achse (53) angeordnet ist.

21. Vorrichtung nach einem der Ansprüche 16 bis 20,
**dadurch gekennzeichnet, dass**
ein Schließkörper als Kolben (60) ausgeführt ist und translatorisch beweglich in einem Gehäuse (63) der Steuerventilanordnung gelagert ist.

22. Vorrichtung nach Anspruch 21,
**dadurch gekennzeichnet, dass**
eine Krafterzeugungseinheit einen elektrischen Magnet (67) umfasst, über den sich in stromdurchflossenem Zustand eine Kraft auf den Kolben (60) ausüben lässt.

23. Vorrichtung nach einem der Ansprüche 21 oder 22,
**dadurch gekennzeichnet, dass**
durch den Kolben (60) eine erste Gehäusekammer (68) und eine zweite Gehäusekammer (69) voneinander getrennt sind und dass in dem Kolben (60) eine Öffnung (70) angeordnet ist, über die Reduktionsmittel von einer Gehäusekammer in die andere Gehäusekammer transferierbar ist.

24. Vorrichtung nach einem der Ansprüche 21 bis 23,
**dadurch gekennzeichnet, dass**
der Kolben (60) über ein Federelement (71) mit dem Gehäuse (63) verbunden ist.

25. Vorrichtung nach einem der Ansprüche 8 bis 24,
**dadurch gekennzeichnet, dass**
ein den ersten Strömungsweg umgehender zweiter Strömungsweg für die Rücklaufleitung (12) vorgesehen ist, wobei nach einer Stillsetzung der Dosierpumpe (8) die Steuerventilanordnung (13) in einer Entlastungsstellung zumindest den zweiten Strömungsweg öffnet.

26. Vorrichtung nach einem der Ansprüche 8 bis 25,
**dadurch gekennzeichnet, dass**
die Vorlaufleitung (9) und die Rücklaufleitung (12) zumindest abschnittsweise, insbesondere im Bereich des Dosierventils (10) koaxial verlaufen.

27. Vorrichtung nach Anspruch 26,
**dadurch gekennzeichnet, dass**
der Bereich, in welchem die Vorlaufleitung (9) und die Rücklaufleitung (12) koaxial verlaufen, wenigstens teilweise innerhalb einer Abgasleitung (4) des Abgassystems angeordnet ist.

## Claims

1. Method for dosing a liquid reducing agent into an exhaust system of an internal combustion engine (1), wherein
- the reducing agent is delivered by a dosing pump (8) to a dosing valve (10), and reducing agent which has been delivered to the dosing valve is selectively either
- discharged by the dosing valve (10) into the exhaust system or
- conducted through the dosing valve (10) and through a return line (12) to a tank (T) for the reducing agent,
wherein, to discharge the reducing agent into the exhaust system, a control valve arrangement (13) arranged in the return line (12) assumes a dosing position in which the return line (12) is shut off such that a flow through it is prevented, and
wherein, to conduct the reducing agent, which has been delivered to the dosing valve, through the dosing valve (10) and through the return line (12) to the tank (T), the control valve arrangement (13) assumes a return position in which the reducing agent can flow, overcoming a counterpressure, through the return line (12) into the tank (T),
**characterized in that**
- the delivery of the reducing agent from the dosing pump to the dosing valve takes place in individual delivery processes which are temporally offset with respect to one another and follow one another in rapid succession,
- the discharge of the reducing agent delivered to the dosing valve from the dosing valve (10) into the exhaust system takes place in individual dosing processes (27, 27a) which are temporally offset with respect to one another and/or
- the conducting of the reducing agent, which has been delivered to the dosing valve, through the dosing valve (10) and through the return line (12) to the tank (T) takes place in individual return processes (26) which are temporally offset with respect to one another,
- wherein the control valve arrangement (13), in the return position, switches into the return line (12) a flow path which is opened up when a predefined return pressure of the reducing agent prevails at the inlet side of the control valve arrangement (13).

2. Method according to Claim 1,
**characterized in that**,
during the operation of the dosing pump (8), for the reducing agent in the dosing valve (10), a positive pressure is permanently maintained at least for the reducing agent which has been delivered to the dosing valve (10).

3. Method according to either of Claims 1 and 2, **characterized in that**
individual dosing processes (27, 27a) and individual return processes (26) alternate in a predefinable sequence.

4. Method according to Claim 3,
**characterized in that**
a differential quantity of a first individual dosing process (27a), which takes place directly after an individual return process (26), in relation to other directly successive individual dosing processes (27) is taken into consideration for the setting of the sequence of individual dosing processes (27, 27a) and individual return processes (26) in order to attain a setpoint throughput.

5. Method according to one of Claims 1 to 4,
**characterized in that**
the reducing agent conducted through the dosing valve (10) in an individual return process (26) is conducted close to the tip of said dosing valve at the exhaust-gas side thereof.

6. Method according to one of Claims 1 to 5,
**characterized in that**,
during a shut-down of the dosing pump (8), the control valve arrangement (13) assumes a relief position in which the return line (12) is relieved of pressure.

7. Method according to one of Claims 1 to 6,
**characterized in that**,
before a start-up of the dosing pump (8), the control valve arrangement (13) assumes a relief position in which the return line (12) is relieved of pressure.

8. Device for dosing a liquid reducing agent into an exhaust system of an internal combustion engine (1), in particular for use in a method according to one of Claims 1 to 6, comprising
- a dosing valve (10) for discharging the reducing agent into the exhaust system,
- a dosing pump (8) for delivering reducing agent to the dosing valve (10) via a feed line (9) which connects the dosing pump (8) to the dosing valve (10), wherein the dosing pump (8) is designed to carry out individual delivery processes for the reducing agent which are temporally offset with respect to one another and follow one another in rapid succession,
- a return line (12) which leads from the dosing valve (10) to a tank (T) for the reducing agent, and
- a control valve arrangement (13) which is arranged in the return line (12) and which can be actuated such that an individual delivery quantity which has been delivered by the dosing pump (8) to the dosing valve (10) in an individual delivery process can selectively be at least approximately completely discharged by the dosing valve (10) into the exhaust system in an individual dosing process (27, 27a) or at least approximately completely returned through the dosing valve (10) and via the return line (12) to the tank (T) for the reducing agent in an individual return process (26),
**characterized in that**
the control valve arrangement (13), when it is in a return position, switches into the return line (12) a first flow path which is opened up when a predefined return pressure of the reducing agent prevails at the inlet side of the control valve arrangement (13).

9. Device according to Claim 8,
**characterized in that**
the dosing valve (10) opens up a valve orifice (20), such that reducing agent can be discharged into the exhaust system, when a predefined dosing pressure of the reducing agent prevails at the inlet side of the dosing valve (10).

10. Device according to Claim 9,
**characterized in that**
the dosing valve (10) and the control valve arrangement (13) are designed in a coordinated manner such that the dosing pressure is greater than the return pressure.

11. Device according to one of Claims 8 to 10,
**characterized in that**
the control valve arrangement (13) arranged in the return line (12), when it is in a dosing position, shuts off the return line (12) such that a flow through the return line (12) from the dosing valve (10) to the tank (T) is prevented.

12. Device according to one of Claims 8 to 11,
**characterized in that**
the control valve arrangement (13), when it is in a relief position in particular after a shut-down of the dosing pump (8), opens up the return line (12) such that the return line (12) is relieved of pressure.

13. Device according to Claim 12,
**characterized in that**,
when the control valve arrangement (13) is in the relief position, the return line (12) is at least approximately completely open.

14. Device according to one of Claims 8 to 13,
**characterized in that**
the control valve arrangement comprises a proportional valve (50, 64) which is arranged in the return line and which has an adjustable closing force.

15. Device according to Claim 14,
**characterized in that**,
when the control valve arrangement is in the return position, the closing force of the proportional valve (50, 64) is set such that the proportional valve (50, 64) opens when a reducing agent pressure prevails which exceeds the predefined return pressure.

16. Device according to either of Claims 14 and 15,
**characterized in that**
the proportional valve (50, 64) comprises a movably mounted closing body (51, 60), a valve seat (52, 65) and an actuable force or torque generating unit (54, 67), wherein the closing body (51, 60), when it is in a working position, is in contact with the valve seat (52, 65), and wherein a closing force or a closing torque can be exerted on the closing body (51, 60) by means of the force or torque generating unit (54, 67).

17. Device according to Claim 16,
**characterized in that**
the closing body is designed as a rotary piston (51) and is rotatably mounted in a housing (56) of the control valve arrangement.

18. Device according to Claim 17,
**characterized in that**
a torque generating unit comprises an electrical coil (54) by means of which, when an electrical current flows through it, a torque can be exerted on an iron core (57) in an axle (53) connected to the rotary piston (51).

19. Device according to Claim 18,
**characterized in that**
the housing (56) of the control valve arrangement is formed as a plastic part and **in that** the coil (54) is arranged as an extrusion-coated coil in the housing (56).

20. Device according to either of Claims 18 and 19,
**characterized in that**
the axle (53) of the rotary piston (51) is formed as a plastics part, and **in that** the iron core (57) is arranged as an extrusion-coated iron core in the axle (53).

21. Device according to one of Claims 16 to 20,
**characterized in that**
a closing body is formed as a piston (60) and is mounted so as to be movable in a translatory manner in a housing (63) of the control valve arrangement.

22. Device according to Claim 21,
**characterized in that**
a force generating unit comprises an electromagnet (67) by means of which, when an electrical current flows through it, a force can be exerted on the piston (60).

23. Device according to either of Claims 21 and 22,
**characterized in that**
the piston (60) separates a first housing chamber (68) and a second housing chamber (69) from one another, and **in that** an orifice (70) is arranged in the piston (60), via which orifice reducing agent can be transferred from one housing chamber into the other housing chamber.

24. Device according to one of Claims 21 to 23,
**characterized in that**
the piston (60) is connected to the housing (63) via a spring element (71).

25. Device according to one of Claims 8 to 24,
**characterized in that**
a second flow path, which bypasses the first flow path, is provided for the return line (12), wherein after a shut-down of the dosing pump (8), the control valve arrangement (13), when it is in a relief position, opens up at least the second flow path.

26. Device according to one of Claims 8 to 25,
**characterized in that**
the feed line (9) and the return line (12) run coaxially at least in portions, in particular in the region of the dosing valve (10).

27. Device according to Claim 26,
**characterized in that**
the region in which the feed line (9) and the return line (12) run coaxially is arranged at least partially within an exhaust line (4) of the exhaust system.

## Revendications

1. Procédé de dosage d'un agent de réduction fluide dans un système d'échappement d'un moteur à combustion interne (1) ;
- l'agent de réduction étant transporté d'une pompe de dosage (8) à une soupape de dosage (10) et l'agent de réduction transporté depuis la soupape de dosage étant soit ;
- envoyé dans le système d'échappement depuis la soupape de dosage (10) ; soit
- guidé à travers la soupape de dosage (10) et à travers une conduite de reflux (12) jusqu'à un réservoir (T) prévu pour l'agent de réduction ;
un agencement de soupape de commande (13) disposé dans la conduite de reflux (12) prenant une position de dosage pour envoyer l'agent de réduction dans le système d'échappement, la conduite de reflux (12) étant bloquée de façon à entraver tout écoulement dans ladite position ; et
l'agencement de soupape de commande (13) prenant une position de reflux pour guider l'agent de réduction transporté à travers la soupape de dosage (10) jusqu'à la soupape de dosage et à travers la conduite de reflux (12) jusqu'au réservoir (T), l'agent de réduction pouvant s'écouler dans le réservoir (T) dans ladite position à travers la conduite de reflux (12) en dépassant une contre-pression ;
**caractérisé en ce que** :
- le transport de l'agent de réduction de la pompe de dosage à la soupape de dosage se produit lors de processus de transport individuels se succédant rapidement, décalés dans le temps ;
- le renvoi de l'agent de réduction transporté jusqu'à la soupape de dosage se produit de la soupape de dosage (10) dans le système d'échappement lors de processus de dosage individuels (27, 27a) décalés dans le temps ; et/ou
- le guidage de l'agent de réduction transporté jusqu'à la soupape de dosage se produit à travers la soupape de dosage (10) et à travers la conduite de reflux (12) jusqu'au réservoir (T) lors de processus de reflux individuels (26) décalés dans le temps ;
- l'agencement de soupape de commande (13) commute, dans la position de reflux, une voie d'écoulement dans la conduite de reflux (12) qui est libérée lorsqu'une pression de reflux prédéfinie de l'agent de réduction est appliquée du côté d'entrée de l'agencement de soupape de commande (13).

2. Procédé selon la revendication 1, **caractérisé en ce que** lorsque la pompe de dosage (8) fonctionne de façon durable pour l'agent de réduction dans la soupape de dosage (10), une surpression est maintenue au moins pour l'agent de réduction transporté à la soupape de dosage (10).

3. Procédé selon l'une quelconque des revendications 1 ou 2, **caractérisé en ce que** les processus de dosage individuels (27, 27a) et les processus de reflux individuels (26) alternent selon une succession prédéfinie.

4. Procédé selon la revendication 3, **caractérisé en ce que** lors de la mise en place de la succession de processus de dosage individuels (27, 27a) et de processus de reflux individuels (26) pour atteindre un débit théorique, une quantité différentielle d'un premier processus de dosage individuel (27a) se produisant par raccordement direct à un processus de reflux individuel (26) est pris en compte par rapport à d'autres processus de dosage individuels (27) se suivant directement.

5. Procédé selon l'une quelconque des revendications 1 à 4, **caractérisé en ce que** l'agent de réduction guidé à travers la soupape de dosage (10) lors d'un processus de reflux individuel (26) est guidé jusqu'à proximité de l'extrémité située du côté d'échappement de ladite soupape.

6. Procédé selon l'une quelconque des revendications 1 à 5, **caractérisé en ce qu'**en cas d'arrêt de ladite pompe de dosage (8), l'agencement de soupape de commande (13) prend une position de décharge dans laquelle la conduite de reflux (12) est déchargée de sa pression.

7. Procédé selon l'une quelconque des revendications 1 à 6, **caractérisé en ce qu'**avant de mettre en service la pompe de dosage (8), l'agencement de soupape de commande (13) prend une position de décharge dans laquelle la conduite de reflux (12) est déchargée de sa pression.

8. Dispositif de dosage d'un agent de réduction fluide dans un système d'échappement d'un moteur à combustion interne (1), notamment à utiliser dans un procédé selon l'une quelconque des revendications 1 à 6, comprenant :
- une soupape de dosage (10) servant à envoyer l'agent de réduction dans le système d'échappement ;
- une pompe de dosage (8) servant à transporter l'agent de réduction jusqu'à la soupape de dosage (10) par le biais d'une conduite d'amenée (9) reliant la pompe de dosage (8) à la soupape de dosage (10), la pompe de dosage (8) étant conçue pour réaliser rapidement des processus de transport individuels se succédant rapidement, décalés dans le temps, pour l'agent de réduction ;
- une conduite de reflux (12) guidant l'agent de réduction de la soupape de dosage (10) à un réservoir (T) ; et
- un agencement de soupape de commande (13) disposé dans la conduite de reflux (12), ledit agencement pouvant être commandé de telle sorte qu'une quantité de transport individuelle d'agent de réduction transportée de la pompe de dosage (8) à la soupape de dosage (10) lors d'un processus de transport individuel peut être ramenée au moins approximativement entièrement au choix de la soupape de dosage (10) dans le système d'échappement lors d'un processus de dosage individuel (27, 27a) ou être guidée à travers la soupape de dosage (10) jusqu'au réservoir (T) par le biais de la conduite de reflux (12) lors d'un processus de reflux individuel (26) ;
**caractérisé en ce que** :
l'agencement de soupape de commande (13) commute une première voie d'écoulement dans la conduite de reflux (12) dans une position de reflux, une pression de reflux prédéfinie de l'agent de réduction étant libérée du côté d'entrée de l'agencement de soupape de commande (13) dans ladite position.

9. Dispositif selon la revendication 8, **caractérisé en ce que** la soupape de dosage (10) libère une ouverture de soupape (20) à une pression de dosage prédéfinie de l'agent de réduction régnant du côté d'entrée de la soupape de dosage (10), de sorte que l'agent de réduction peut être envoyé dans le système d'échappement.

10. Dispositif selon la revendication 9, **caractérisé en ce que** la soupape de dosage (10) et l'agencement de soupape de commande (13) sont réalisés de façon à présenter une correspondance telle que la pression de dosage est supérieure à la pression de reflux.

11. Dispositif selon l'une quelconque des revendications 8 à 10, **caractérisé en ce que** l'agencement de soupape de commande (13) disposé dans la conduite de reflux (12) bloque de telle sorte la conduite de reflux (12) dans une position de dosage que tout écoulement est entravé dans la conduite de reflux (12), de la soupape de dosage (10) vers le réservoir (T).

12. Dispositif selon l'une quelconque des revendications 8 à 11, **caractérisé en ce que** l'agencement de soupape de commande (13) libère la conduite de reflux (12) dans une position de décharge, notamment après arrêt de la pompe de dosage (8), de telle sorte que la conduite de reflux (12) est déchargée de sa pression.

13. Dispositif selon la revendication 12, **caractérisé en ce que** la conduite de reflux (12) est ouverte au moins approximativement entièrement dans la position de décharge de l'agencement de soupape de commande (13).

14. Dispositif selon l'une quelconque des revendications 8 à 13, **caractérisé en ce que** l'agencement de soupape de commande comprend une soupape proportionnelle (50, 64) disposée dans la conduite de reflux et permettant de régler une force de fermeture.

15. Dispositif selon la revendication 14, **caractérisé en ce que** la force de fermeture de la soupape proportionnelle (50, 64) est réglée de telle sorte dans la position de reflux de l'agencement de soupape de commande que la soupape proportionnelle (50, 64) s'ouvre lorsque la pression de l'agent de réduction appliquée dépasse la pression de reflux prédéfinie.

16. Dispositif selon l'une quelconque des revendications 14 à 15, **caractérisé en ce que** la soupape proportionnelle (50, 64) comprend un corps de fermeture (51, 60) disposé de façon mobile, un siège de soupape (52, 65) et une unité de production de force ou de couple (54, 67) commandable, le corps de fermeture (51, 60) étant en contact avec le siège de soupape (52, 65) dans une position de travail et une force de fermeture ou un couple de fermeture pouvant être appliqués sur le corps de fermeture (51, 60) par le biais de l'unité de production de force ou de couple (54, 67).

17. Dispositif selon la revendication 16, **caractérisé en ce que** le corps de fermeture prend la forme d'un piston tournant (51) et est disposé de façon à pouvoir pivoter dans un carter (56) de l'agencement de soupape de commande.

18. Dispositif selon la revendication 17, **caractérisé en ce qu'**une unité de production de couple comprend une bobine électrique (54) via laquelle un couple de rotation est appliqué sur un noyau en acier (57) dans un axe (53) relié au piston tournant (51), dans l'état d'écoulement du flux.

19. Dispositif selon la revendication 18, **caractérisé en ce que** le carter (56) de l'agencement de soupape de commande prend la forme d'une pièce en plastique et que la bobine (54) est disposée dans le carter (56) sous la forme d'une bobine injectée autour.

20. Dispositif selon l'une quelconque des revendications 18 ou 19, **caractérisé en ce que** l'axe (53) du piston tournant (51) prend la forme d'une pièce en plastique et que le noyau en acier (57) est disposé dans l'axe (53) sous la forme d'un noyau en acier injecté autour.

21. Dispositif selon l'une quelconque des revendications 16 à 20, **caractérisé en ce qu'**un corps de fermeture prend la forme d'un piston (60) et est disposé de façon à se mouvoir selon un mouvement de translation dans un carter (63) de l'agencement de soupape de commande.

22. Dispositif selon la revendication 21, **caractérisé en ce qu'**une unité de production de force comprend un aimant (67) électrique permettant d'exercer une force sur le piston (60) dans l'état d'écoulement du flux.

23. Dispositif selon l'une quelconque des revendications 21 ou 22, **caractérisé en ce qu'**un premier compartiment de carter (68) et un deuxième compartiment de carter (69) sont séparés l'un de l'autre par le piston (60) et qu'une ouverture (70) via laquelle l'agent de réduction peut être transférée d'un compartiment de carter dans l'autre compartiment de carter est disposée dans le piston (60).

24. Dispositif selon l'une quelconque des revendications 21 à 23, **caractérisé en ce que** le piston (60) est relié au carter (63) par le biais d'un élément de ressort (71).

25. Dispositif selon l'une quelconque des revendications 8 à 24, **caractérisé en ce qu'**une deuxième voie d'écoulement entourant la première voie d'écoulement est prévue pour la conduite de reflux (12), l'agencement de soupape de commande (13) ouvrant au moins la deuxième voie d'écoulement dans une position de décharge après arrêt de la pompe de dosage (8) .

26. Dispositif selon l'une quelconque des revendications 8 à 25, **caractérisé en ce que** la conduite d'amenée (9) et la conduite de reflux (12) s'étendent au moins en partie dans le plan coaxial, notamment dans la région de la soupape de dosage (10).

27. Dispositif selon la revendication 26, **caractérisé en ce que** la région dans laquelle la conduite d'amenée (9) et la conduite de reflux (12) s'étendent dans le plan coaxial est disposée au moins en partie à l'intérieur d'une conduite d'échappement (4) du système d'échappement.
